# EUROPEAN PATENT APPLICATION

(11) **EP 2 259 272 A1**
(43) Date of publication of application: **08.12.2010**
(21) Application number: 09725364.5
(22) Date of filing: 24.03.2009
(51) Int. Cl.: H01B 13/00, B32B 7/02, C01B 31/02, G06F 3/041, H01B 5/14

(54) **ELECTRICALLY CONDUCTIVE COMPLEX AND PROCESS FOR PRODUCTION THEREOF**

(30) Priority: 25.03.2008 JP 2008077520
(71) Applicant: Toray Industries, Inc., Tokyo 103-8666 (JP)
(72) Inventor: IKEUCHI, Shuko, Nagoya-shi Aichi 455-8502 (JP); NISHINO, Hidekazu, Nagoya-shi Aichi 455-8502 (JP); YOSHIKAWA, Masahito, Tokyo 1038666 (JP); SATO, Kenichi, Nagoya-shi Aichi 455-8502 (JP); WATANABE, Osamu, Otsu-shi Shiga 520-8558 (JP)
(74) Representative: Webster, Jeremy Mark
(86) International application number: PCT/JP2009/055790
(87) International publication number: WO 2009/119563

(57) **Abstract**

Disclosed is a method for producing a conductive composite, which comprises a first step of coating a composition (B) containing a dispersing agent (A) having a hydroxyl group in the molecule and a conductive material on a substrate, and a subsequent second step of coating a liquid containing a compound (C) represented by the formula (1) shown below and/or a hydrolysate of the compound (C) on the surface coated with the composition (B).

According to the present invention, there is provided a conductive composite which has high conductivity, and exhibits stable characteristics even under high-temperature and high-humidity over a long period and therefore has excellent moist heat resistance.

## Description

### TECHNICAL FIELD

The present invention relates to a conductive composite, and a method for producing the same. More particularly, the present invention relates to a conductive composite which has high conductivity, and exhibits stable characteristics even under high-temperature and high-humidity over a long period and therefore has excellent moist heat resistance, and a method for producing the same.

### BACKGROUND ART

Metal oxide, a conductive polymer and a carbon-based conductive material are known as a conductive material. Graphite, carbon, carbon black, a carbon fiber and a carbon nanotube are known as the carbon-based conductive material.

The carbon nanotube was first reported, widely, in 1991. The carbon nanotube substantially has a cylindrical shape obtained by winding one sheet of graphite. The carbon nanotube per se has excellent true conductivity and is expected to be used as a conductive material.

The conductive material is used, for example, for the purpose of imparting antielectricity, electrical conduction, radio wave absorption, electromagnetic shielding and near infrared shielding properties in clean room members, display members and automobile members. Since the carbon nanotube has a high aspect ratio and can form a conduction path in a small amount, it can be a conductive material which is excellent in light transmittance and falling-off resistance when compared with conventional conductive fine particles such as carbon black. For example, an optical transparent conductive film using the carbon nanotube is known (Patent Document 1). In order to obtain a conductive film having excellent light transmittance by using a carbon nanotube, it is necessary that a bundle or a firm aggregate of several tens of thick carbon nanotubes is unbound and highly dispersed to efficiently form a conduction path using a small number of carbon nanotubes.

As a technique of dispersing carbon nanotubes, a technique of dispersing using a dispersing agent is exemplified. In particular, in order to disperse carbon nanotubes more highly, it is suitable to disperse in an aqueous solvent using a dispersing agent which has a hydrophilic group having affinity with water and a hydrophobic group having high affinity with a carbon nanotube. However, a conductive layer obtained from a carbon nanotube composition containing such a dispersing agent having a hydrophilic group has a problem that it has low water resistance and a dispersing agent absorbs moisture under high-temperature and high-humidity conditions, and thus a contact resistance between carbon nanotube conduction paths increased and conductivity decreases.

On the other hand, there is a method in which a resin component as a binder is contained in a carbon nanotube composition, in addition to the dispersing agent, so as to improve film strength and water resistance. However, when the binder is mixed in the carbon nanotube composition, there arises a problem that contact resistance between carbon nanotube conduction paths increases and dispersibility of the carbon nanotube decreases, resulting in drastic deterioration of conductivity of the obtained conductive layer.

Similarly, there is also known a technique in which a resin layer is laminated on a carbon nanotube conductive layer for the purpose of improving film strength and water resistance (Patent Document 2). However, there is a problem that, even when the resin layer is merely laminated on the conductive layer, although film strength and water resistance are temporarily improved, the contact resistance increases and conductivity deteriorates when exposed to high-temperature and high-humidity over a long period.
Patent Document 1: Japanese Unexamined Patent Publication (Kokai) No. 2006-269311
Patent Document 2: Japanese Unexamined Patent Publication (Kokai) No. 2004-526838

### DISCLOSURE OF THE INVENTION

### Problems to be Solved by the Invention

Under the above circumstances, the present invention has been made and an object thereof is to provide a conductive composite which has high moist heat resistance, and has high conductivity, and a method for producing the same.

### Means for Solving the Problems

The present inventors have intensively studied and found that it is possible to obtain a conductive composite which has excellent conductivity, and has high moist heat resistance by performing a first step of dispersing a conductive material using a dispersing agent (A) having a hydroxyl group in the molecule and containing the obtained composition (B) on a substrate, and performing a second step of coating a liquid containing a compound (C) capable of forming a metal alkoxide and/or a hydrolysate of the compound (C), thus leading to the present invention. The mechanism of improving moist heat resistance is considered that the hydroxyl group of the dispersing agent (A) and the compound (C) and/or the hydrolysate of the compound (C) were condensed.

That is, the present invention provides a method for producing a conductive composite, which comprises a first step of coating a composition (B) containing a dispersing agent (A) having a hydroxyl group in the molecule and a conductive material on a substrate, and a subsequent second step of coating a liquid containing a compound (C) represented by the formula (1) shown below and/or a hydrolysate of the compound (C) on the surface coated with the composition (B):

(R¹)ₘMXₙ₋ₘ (1)

wherein R¹ represents one, or two or more kinds of groups selected from a hydrogen atom, an alkyl group, an acyl group, a vinyl group, an allyl group, a cyclohexyl group, a phenyl group, an epoxy group, a (meth)acryloxy group, an ureide group, an amide group, a fluoroacetamide group, an isocyanate group and a substituted derivative thereof and, when m is 2 or more, R¹(s) may be the same of different; M represents one, or two or more kinds of metal atoms capable of forming a metal alkoxide selected from metal atoms having a valence of n; X represents a halogen atom or represented by OR² and, when n - m is 2 or more, X(s) may be the same or different; R² represents one, or two or more kinds of groups selected from a hydrogen atom, an alkyl group, an acyl group, a vinyl group, an allyl group, a cyclohexyl group, a phenyl group, an epoxy group, a (meth)acryloxy group, an ureide group, an amide group, a fluoroacetamide group, an isocyanate group and a substituted derivative thereof; and m is 0 to (n-2), and n is 2 or more.

The present invention also provides a composition comprising a carbon nanotube, a dispersing agent (A) having a hydroxyl group in the molecule and carbon nanotube, wherein 50 or more carbon nanotubes among 100 carbon nanotubes contained are double-walled carbon nanotubes and also the composition is acidic.

The present invention also provides a conductive composite comprising a substrate and a conductive layer formed on the substrate, wherein the conductive layer contains a dispersing agent (A) having a hydroxyl group in the molecule and/or a derivative thereof, and a carbon nanotube, 50 or more carbon nanotubes among 100 carbon nanotubes contained are double-walled carbon nanotubes, and the conductive layer is coated with a coating layer of a compound (C) and/or a polycondensate of a hydrolysate of the compound (C).

The present invention also provides a touch panel comprising the above conductive composite.

### Effects of the Invention

According to the present invention, it is possible to obtain a conductive composite which has high moist heat resistance and excellent conductivity.

### BRIEF DESCRIPTION OF THE DRAWINGS

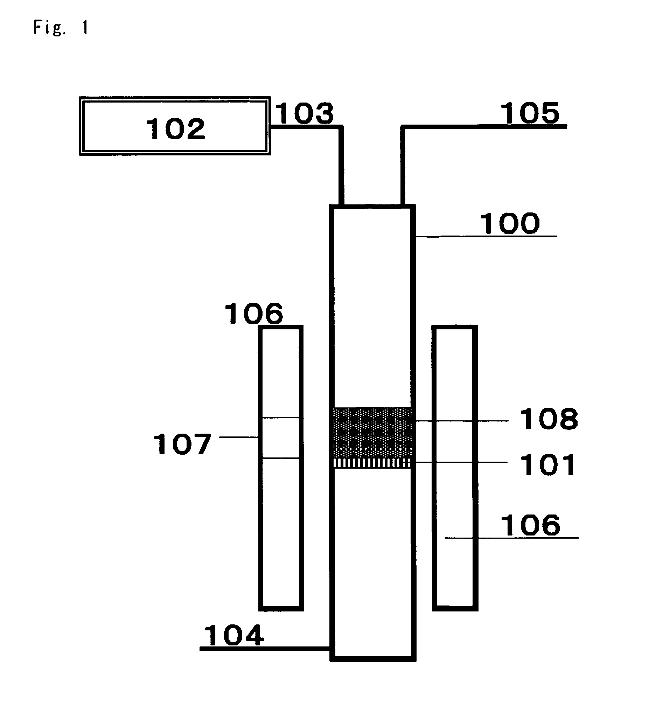

Fig. 1 is a schematic view of a fluid bed reactor used in Reference Example 1.

### Description of Reference Numerals

100: Reactor
101: Quartz sintered plate
102: Sealed type catalyst feeder
103: Catalyst charging line
104: Raw gas feeding line
105: Waste gas line
106: Heater
107: Inspection door
108: Catalyst

### BEST MODE FOR CARRYING OUT THE INVENTION

The present invention relates to a technology in which a compound (C) capable of forming a metal alkoxide and/or a hydrolysate of the compound (C) are polycondensated on a conductive layer containing a conductive material and a dispersing agent (A) having a hydroxyl group in the molecule, thereby improving water resistance of the conductive layer.

In the present invention, a conductive layer is formed by obtaining a composition in which a conductive material is highly dispersed in a solvent using a dispersing agent (A) having a hydroxyl group in the molecule as a dispersing agent, and coating the composition on a substrate. Since the hydroxyl group is a hydrophilic group, the dispersing agent (A) can highly dissolve the conductive material in the solvent, thus making it possible to obtain a conductive layer having high conductivity and transparency. However, because of hydrophilicity of the dispersing agent (A), there also arises a problem that water resistance of the conductive layer becomes worse. Therefore, in the present invention, as the subsequent step, a liquid containing a compound (C) capable of forming a metal alkoxide and/or a hydrolysate of the compound (C) is coated on the conductive layer. Thus, water resistance is improved by reacting the hydroxyl group of the dispersing agent (A) with the compound (C) and/or a hydrolysate of the compound (C). That is, the compound (C) is hydrolyzed, and the hydrolysates approach one another by a hydrogen bond and undergo dehydration polycondensation in a drying or heating step. In that case, the compound (C) also undergoes dehydration condensation with the dispersing agent (A). The same shall apply to the case where the hydrolysate of the compound (C) is coated. In such a manner, it is possible to form a bond in a three-dimensional network form on the entire conductive layer. The conductive composite thus obtained has high water resistance, moist heat resistance and strength. Since the conductive layer is provided on the substrate and the polycondensate composed of the compound (C) and/or a hydrolysate of the compound (C) is provided thereon, a conductive composite having excellent conductivity can be obtained without increasing contact resistance of a conduction path due to a conductive material.

Examples of the conductive material in the present invention include an inorganic conductive material and an organic conductive material. Examples of the inorganic conductive material include metal, metal oxide and a carbon-based material. These materials can also be used in combination.

The metallic material is preferably metal nanoparticles having a size of about 1 to 100 nm, particularly silver nanoparticles. Silver nanoparticles are produced and commercially available in various forms such as a powder and a dispersion liquid. For example, a powder having a particle size of less than 100 nm or a particle size of 70 nm is commercially available as the powder. A dispersion liquid prepared by dispersing in water or ethylene glycol is commercially available as the dispersion liquid. A dispersion stabilizer is sometimes added to the dispersion liquid.

Examples of the organic conductive material include a conductive polymer. Of the organic conductive material, a carbon-based material is preferably used in view of the environment and cost. Examples of the carbon-based material include graphite, carbon, carbon black, carbon fiber and carbon nanotube. Of the carbon-based material, a carbon nanotube is preferably used because of its excellent conductivity and transparency.

The carbon nanotube has a cylindrical shape obtained by winding one sheet of graphite. A carbon nanotube obtained by single-layer winding is referred to as a single-walled carbon nanotube, a carbon nanotube obtained by double-layer winding is referred to as a double-walled carbon nanotube, and a carbon nanotube obtained by multilayer winding is referred to as a multi-walled carbon nanotube.

According to the application characteristics required to the conductive composite of the present invention, any of single-walled, double-walled and multi-walled carbon nanotubes can be used. When a carbon nanotube composed of a small number of layers such as single layer to five layers is used, a conductive composite having higher conductivity and higher light transmittance can be obtained. When a carbon nanotube composed of two or more layers is used, a conductive composite having a low light wavelength dependency in optical characteristics can be obtained. In order to obtain a conductive composite having a high light transmittance, it is preferable to contain 50 or more carbon nanotubes composed of one to five layers among 100 carbon nanotubes. A multi-walled carbon nanotube composed of six or more layers commonly have not only low crystallinity and low conductivity, but also a large diameter and a small number of contact points per amount of a carbon nanotube unit in the conductive layer, and thus transparent conductivity decreases. That is, carbon nanotubes composed of one to five layers are preferably because of high conductivity and excellent transparency. Preferably, 70 or more carbon nanotubes among 100 carbon nanotubes are carbon nanotubes composed of one to five layers. More preferably, 80 or more carbon nanotubes among 100 carbon nanotubes are carbon nanotubes composed of one to five layers. Still more preferably, when 50 or more carbon nanotubes among 100 carbon nanotubes are carbon nanotubes composed of two to five layers, dispersibility and conductivity are excellent. Still more preferably, 70 or more carbon nanotubes among 100 carbon nanotubes are carbon nanotubes composed of two to five layers. Particularly, when 50 or more carbon nanotubes among 100 carbon nanotubes are double-walled nanotubes, dispersibility and conductivity are extremely high and there it is preferable.

The number of layers of the carbon nanotube can be measured, for example, as described below. When the carbon nanotube is a composition prepared by dispersing in a medium such as liquid, and a solvent is an aqueous solvent, the composition is appropriately diluted with water to the concentration at which the layer is easily observed and several µL of the dilute solution is dropped on a collodion membrane and, after air drying, the carbon nanotube on the collodion membrane is observed by a direct transmission electron microscope. When the solvent is a non-aqueous solvent, after once removing the solvent by drying and dispersing again in water, the composition is appropriately diluted with water and several µL of the dilute solution is dropped on a collodion membrane and, after air drying, the carbon nanotube is observed by a direct transmission electron microscope. In the case of collecting the carbon nanotube from a conductive composite, after embedding the conductive composite in an epoxy resin, the conductive composite can be examined by observing a thin spice having a thickness of 0.1 µm or less, obtained by cutting using razor, using a transmission electron microscope. It is also possible to examine using a high resolution transmission electron microscope in the same manner as in the case of the composition after extracting the carbon nanotube with a solvent. The concentration of the carbon nanotube concentration in the liquid to be dropped on the collodion membrane may be the concentration which enables observation of each carbon nanotube is, for example, 0.001% by weight.

The number of layers of the above carbon nanotube is measured as described below. Using a transmission electron microscope, the carbon nanotube is observed at a magnification of 400,000 times and the number of layers is measured with respect to 100 carbon nanotubes extracted at random from the visual field in which the carbon nanotube accounts for 10% or more of a visual field area in the visual field measuring 75 nm by 75 nm. When it is impossible to measure 100 layers in one visual field, the measurement is conducted from a plurality of visual fields until 100 layers can be counted. At this time, regarding one carbon nanotube, it is counted as one if the carbon nanotube can be partially seen in the visual field and it is not necessarily required that both ends can be seen. Even if one carbon nanotube is recognized in the state of being connected outside the visual field, it is counted as two when it is recognized as two in the visual field.

The diameter of the carbon nanotube is not particularly limited and the diameter of the carbon nanotube having layers in the number within the above preferable range is commonly from 1 nm to 10 nm.

The surface or the end of the carbon nanotube may be modified with a functional group or an alkyl group. For example, it is possible to functionalize with a carboxyl group or a hydroxyl group by heating in an acid. It is also possible to be doped with an alkali metal or a halogen. It is preferred that conductivity of the carbon nanotube is improved by doping.

There is no particular limitation on the length of the carbon nanotube. Since it is impossible to efficiently form a conductive path when the length is too short, the length is preferably 0.1 µm or more, and more preferably 0.5 µm. The upper limit of the length is preferably 5 µm or less because dispersibility tends to decrease when the length is too long.

In order to obtain a conductive composite having excellent transparent conductivity, use of a carbon nanotube having high crystallinity and high quality is preferred. The carbon nanotube per se having high crystallinity is excellent in electrical conductivity. However, since such a high-quality carbon nanotube forms a bundle or an aggregate more firmly when compared with a carbon nanotube having low crystallinity, it is very difficult to highly disperse in a stable manner by unbinding one by one. Therefore, in order to obtain a conductive composite having high conductivity using a carbon nanotube having high crystallinity, a dispersion techniques of the carbon nanotube is very important.

The dispersing agent (A) having a hydroxyl group in the molecule acts as a carbon nanotube dispersing agent when a composition (B) containing a carbon nanotube is obtained. The hydroxyl group in the dispersing agent (A) is suited for dispersing the carbon nanotube in an aqueous solvent, and enables dispersion of a carbon nanotube having high crystallinity.

The dispersing agent (A) having a hydroxyl group in the molecule is preferably a nonvolatile organic compound. The nonvolatile organic compound is not easily volatilized in atmospheric air at a normal temperature under a normal pressure. Use of the nonvolatile organic compound enables inhibition of vaporizing during coating of the composition (B) on the substrate. Therefore, the conductive material can be satisfactorily maintained during coating, thus making it possible to stably coat the conductive material. Since no vaporization arises during coating, an amount of components of the composition does not change, which enables stable film thickness and wetting of a substrate with the composition, thus making it possible to finally obtain a conductive layer which has uniform characteristics and is excellent in water resistance, moist heat resistance and durability.

The dispersing agent (A) having a hydroxyl group in the molecule may be either a polymer (containing 100 or more monomer units) or a monomer or oligomer (containing less than 100 monomer units) as long as it has dispersibility of a conductive material. It is preferred to use a polymer compound such as a polymer because durability of a conductive layer is improved.

A molecular weight of the dispersing agent (A) having a hydroxyl group in the molecule is preferably 100 or more. When the molecular weight is 100 or more, it is possible to interact with the conductive material and dispersion of the conductive material becomes more satisfactory. Although it depends on the length of the conductive material, the larger the molecular weight, the more the dispersing agent interacts with the conductive material, thus improving dispersibility. For example, in case the dispersing agent (A) is a polymer, when the polymer chain becomes longer, the polymer is entangled with the conductive material, thus making it possible to disperse very stably. However, since dispersibility decreases to the contrary when the molecular weight is too large, the molecular weight is preferably from 100 to 10,000,000, and more preferably from 10,000 to 1,000,000.

The polymer is not particularly limited as long as the conductive material can be dispersed therein, and can be selected from a synthetic polymer and a natural polymer. Examples of the synthetic polymer include polyetherdiol, polyesterdiol, polycarbonatediol, polyvinyl alcohol, a partially saponified polyvinyl alcohol, an acetoacetyl group-modified polyvinyl alcohol, an acetal group-modified polyvinyl alcohol, a butyral group-modified polyvinyl alcohol, a silanol group-modified polyvinyl alcohol, an ethylene-vinyl alcohol copolymer, an ethylene-vinyl alcohol-vinyl acetate copolymerized resin, dimethylaminoethyl acrylate, dimethylaminoethyl methacrylate, an acrylic resin, an epoxy resin, a modified epoxy-based resin, a phenoxy resin, a modified phenoxy-based resin, a phenoxyether resin, a phenoxyester resin, a fluorine-based resin, a melamine resin, an alkyd resin, a phenol resin, polyacrylamide, polyacrylic acid, polystyrenesulfonic acid, polyethylene glycol and polyvinyl pyrrolidone. The natural polymer can be selected from polysaccharides such as starch, pullulan, dextran, dextrin, guar gum, xanthan gum, amylose, amylopectin, alginic acid, acasia, carrageenan, chondroitinsulfuric acid, hyaluronic acid, curdlan, chitin, chitosan, cellulose and a derivative thereof. As used herein, the term derivative means a conventionally known compound such as ester or ether. These natural polymers can be used alone, or two or more kinds of them can be used in combination. Of these natural polymers, polysaccharides and a derivative thereof are preferred because they are excellent in conductive material dispersibility. Polysaccharides and a derivative thereof are also capable of highly dispersing the carbon nanotube, which is not easily dispersed, therein. Furthermore, cellulose and a derivative thereof are preferable because of high film formability. In particular, an ester and an ether derivative are preferable. Specifically, carboxymethyl cellulose and a salt thereof are preferable.

Examples of the monomer and the oligomer include cationic surfactants, amphoteric surfactants, anionic surfactants and nonionic surfactants; monosaccharides such as glucose, ribose and deoxyribose; disaccharides such as sucrose, maltose, lactose, cellobiose and trehalose; oligosaccharides such as cyclodextrin; and steroid derivatives such as bile acid, cholesterol and cholic acid. Because of conductive material dispersibility and moist heat resistance, nonionic surfactants and steroid derivatives are preferably used.

Examples of nonionic surfactants include sugar ester-based surfactants such as sorbitan fatty acid ester and polyoxyethylene sorbitan fatty acid ester; fatty acid ester-based surfactants such as polyoxyethylene resin acid ester and polyoxyethylene fatty acid diethyl; ether-based surfactants such as polyoxyethylene alkyl ether, polyoxyethylene alkyl phenyl ether and polyoxyethylene polypropylene glycol; and aromatic nonionic surfactants such as polyoxyalkylene octyl phenyl ether, polyoxyalkylene nonyl phenyl ether, polyoxyalkyl dibutyl phenyl ether, polyoxyalkyl styryl phenyl ether, polyoxyalkyl benzyl phenyl ether, polyoxyalkyl bisphenyl ether and polyoxyalkyl cumyl phenyl ether. Of these surfactants, aromatic nonionic surfactants are preferable because of excellent dispersibility, dispersion stability and increase in concentration.

When these polymers, monomers and oligomers have a hydroxyl group in the molecule, they can be directly used as the dispersing agent (A) having a hydroxyl group in the molecule. When they have no hydroxyl group in the molecule, they are used as the dispersing agent (A) having a hydroxyl group in the molecule after imparting the hydroxyl group by subjecting to a treatment such as modification or denaturation. It is possible to use, as the method of imparting a hydroxyl group, a method of reacting with a monomer or oligomer having a hydroxyl group in the case of a resin.

The amount of hydroxyl groups in the molecule can be determined as a hydroxyl value by the method defined in JISK0070 (revised in 1992). The hydroxyl value is not particularly limited as long as dispersion can be conducted by an interaction of the dispersing agent (A) interacts with the conductive material in the solvent, and is preferably from 50 to 1,000, and more preferably from 50 to 600.

In the present invention, the composition (B) is prepared by dispersing a dispersing agent (A) having a hydroxyl group in the molecule and a conductive material in a solvent.

The composition (B) containing a conductive material may be a solid (including a gel form) or a liquid, and preferably constitutes a dispersion liquid. The term dispersion liquid means a liquid in a state where the obtained composition contains neither sediment nor aggregate in visual observation, and also neither sediment nor aggregate is present in visual observation after standing for at least 24 hours.

The viscosity of the composition (B) is preferably from 0.5 to 100, and more preferably from 0.5 to 50, in terms of absolute viscosity determined from a value measured by an E-type viscometer using the Casson's formula.

The pH of the composition (B) of the present invention is preferably in an acidic range (lower than pH 7). Although it depends on the dispersing agent, the pH is more preferably from 3 to 6. When the pH is too low, solubility of the dispersing agent decreases and a repulsive force between conductive materials decreases, and thus the conductive materials are likely to be aggregated. However, when the pH is in a neutral or alkali range, wettability to the substrate decreases and it tends to become difficult to coat. When the pH is in an acidic range, since dispersion stability of the conductive material is high and also wettability to the substrate is high, it is possible to form a conductive composite which has high conductivity and high durability.

The solvent is not limited as long as the dispersing agent (A) having a hydroxyl group in the molecule is dissolved therein and also the conductive material is dispersed therein, and may be an aqueous solvent or a non-aqueous solvent. It is possible to use, as the non-aqueous solvent, hydrocarbons (toluene, xylene, etc.), chlorine-containing hydrocarbons (methylene chloride, chloroform, chlorobenzene, etc.), ethers (dioxane, tetrahydrofuran, methyl cellosolve, etc.), ether alcohols (ethoxyethanol, methoxyethoxyethanol, etc.), esters (methyl acetate, ethyl acetate, etc.), ketones (cyclohexanone, methyl ethyl ketone, etc.), alcohols (ethanol, isopropanol, phenol, etc.), lower carboxylic acids (acetic acid, etc.), amines (triethylamine, trimethanolamine, etc.), nitrogen-containing polar solvents (N,N-dimethylformamide, nitromethane, N-methyl pyrrolidone, acetonitrile, etc.) and sulfur compounds (dimethyl sulfoxide, etc.).

Of these solvents, an aqueous solvent selected from water, alcohol, ether and a combination of these solvents is preferably used in view of dispersibility of the carbon nanotube.

The composition (B) may contain, in addition to the dispersing agent (A) having a hydroxyl group in the molecule and a conductive material, other additives such as a wetting agent described hereinafter.

The content of the conductive material in the composition (B) is preferably from 0.01 to 20% by weight, and more preferably from 0.05 to 10% by weight. The content of the dispersing agent (A) having a hydroxyl group in the molecule in the composition (B) is preferably from 0.01 to 60% by weight, and more preferably from 0.02 to 30% by weight. When the composition contains, in addition to the dispersing agent (A) having a hydroxyl group in the molecule, additives, the total weight of the dispersing agent (A) having a hydroxyl group in the molecule and the additive is preferably set within a range from 0.01 to 60% by weight, and more preferably from 0.02 to 30% by weight. The residue is a dispersant such as a solvent.

Since the composition (B) is excellent in dispersibility of the conductive material by using the dispersing agent (A) having a hydroxyl group in the molecule, it is possible that a composition having a high concentration than a desired content of the conductive material is prepared and can be used after diluting to a desired concentration using a solvent.

A conductive composite can be obtained by preparing such a composition (B) and coating the composition on a substrate to form a conductive layer. The shape, size and material of the substrate of the conductive composite are not particularly limited as long as the composition (B) can be coated and the obtained conductive layer can be fixed, and the substrate can be selected according to the objective applications. The substrate may be, for example, any of a film, a sheet, a plate, a paper, a fiber and particles. When the material is, for example, an organic material, it can be selected from resins such as polycarbonate, polyester, polyamide, acryl, polyurethane, polymethyl methacrylate, cellulose, triacetyl cellulose and amorphous polyolefin. When the material is an inorganic material, it can be selected from metals such as stainless steel, aluminum, iron, gold and silver; glass; and carbon materials. A resin film is preferably used as the substrate because it is possible to obtain a conductive film which is excellent in adhesion, draw followability and flexibility. The thickness of the substrate is preferably from about 0.5 nm to about 1,000 µm, more preferably from about 0.005 to about 1,000 µm, still preferably from about 0.05 to about 500 µm, and further preferably from about 1.0 to about 200 µm.

The substrate may be optionally subjected to a surface treatment. Examples of the surface treatment include physical treatments such as glow discharge, a corona discharge treatment and an ozone treatment.

An under resin layer may also be provided on the surface of the substrate. In this case, the under resin layer is formed between the substrate and the conductive layer. The resin of the under resin layer is not particularly limited and, for example, it is possible to use a polyester resin, an acryl resin, a urethane resin, an epoxy resin, a polycarbonate resin, a silicone resin, an alkyd resin, a urea resin, a phenol resin, a melamine resin, and a combination of two or more kinds of these resins. Of these resins, a thermosetting resin is preferable. It is possible to improve tight adhesion of the conductive layer to the substrate by providing a heat cured resin film as the under resin layer. By crossliking the resin in the heat cured resin film by heat curing, it is possible to ensure tight adhesion to the contact portion between the substrate surface and the conductive layer and to impart durabilities such as solvent resistance, moisture resistance, scratch resistance and heat resistance.

The heat cured resin film preferably contains at least 50% by weight or more of the melamine resin. Since the melamine resin has a lot of polar groups such as a hydroxyl group and an imino group, wettability to water or an aqueous mixed solvent and a composition (B) containing them as a dispersant is improved. Therefore, when the composition (B) containing the melamine resin is coated on the heat cured resin film, it becomes easy to wet and a uniform conductive layer can be formed. That is, since a lowest layer of the composition (B) is restricted on the surface of the heat cured resin film by enhancing wettability and ununiform movement of the composition (B) upon drying is inhibited, a uniform conductive layer free from unevenness is obtained. Thus, a transparent conductive film having excellent in-plane uniformity of surface resistance is obtained. For example, when an electrode is provided at the end of a transparent conductive film, conductive film, a conductive film having excellent linearity between electrodes can be obtained because of excellent in-plane uniformity. When the content of the melamine resin in the thermosetting resin film is less than 50% by weight, wettability with the composition (B) is poor and linearity of the obtained conductive layer decreases. The content of the melamine resin in the thermosetting resin film is preferably from 70 to 90% by weight. When the content of the melamine resin is within the above range, it is possible to obtain a thermosetting resin film which is excellent in balance between the wettability and tight adhesion.

The melamine resin is a resin obtained by the condensation of melamine and formaldehyde. For example, a cured film of a melamine resin can be obtained by condensing melamine with formaldehyde under an alkali condition to obtain methylolmelamine, coating the obtained methylolmelamine on a substrate, and polycondensing the methylolmelamine through heating. In the present invention, for example, it is preferred to use by coating a solvent-soluble melamine resin having a number average molecular weight adjusted within a range from 400 to 100,000. A molar ratio of formaldehyde to be reacted with melamine is preferably from 2 to 4 relative to 1 of melamine. Since the melamine has three amino groups therein, it is possible to react six formaldehydes at maximum. However, methylolmelamine can be preferably used in which about half of formaldehydes (three formaldehydes) among six formaldehydes had been reacted since it is easy to handle as the thermosetting resin. It is also possible to use a methyletherified melamine resin and a butyletherified melamine resin in which hydroxyl groups of a methylolmelamine resin have partially been alkyletherified by reacting with an alcohol. In particular, the methyletherified melamine resin is preferably used in view of balance between hydrophilicity and affinity with an organic solvent.

The thermosetting resin film may contain one or more kinds of thermosetting resins other than the melamine resin. It is possible to adjust a curing temperature, wettability and durability within a predetermined range by containing thermosetting resins other than the melamine resin. Examples of the resin other than the melamine resin include, but are not limited to, a phenol resin, an alkyd resin, an epoxy resin, an acrylic resin, a vinyl alcohol copolymer resin, an isocyanate resin and an urethane resin, and the resin can be selected according to the purposes. A resin having a hydroxyl group and a carboxyl group is preferable since a thermosetting resin film having excellent durability can be formed by crosslinking with the melamine resin. The epoxy resin is preferable since a heat curing temperature can be adjusted in a wide range. Since it becomes possible to variously adjust a cured state, for example, only the epoxy resin is cured at 80 to 120°C and then the epoxy resin and the melamine resin are crosslinked by heating to 150 to 200°C, the epoxy resin can be preferably used in the present invention.

The thermosetting resin film may optionally contain the other components. Examples thereof include compounds containing an acid such as carboxylic acid or sulfonic acid; compounds containing a base, such as amine; and compound having a reactive functional group, such as epoxy, oxetane, hydroxy and isocyanate. These compounds are preferably polyfunctional compounds having two or more acid, base or reactive functional groups in a molecule. These compounds may be resins or low molecular weight compounds. Of these compounds, a compound, which can be used as a curing agent of the melamine resin, is preferably used.

When the epoxy resin is used as the other component, a curing reaction can be adjusted by adding a polymerization initiator. It is also possible to adjust the degree of crosslinking of a thermosetting resin composition film before heat crosslinking of the melamine resin by containing a photocurable or moisture-curable resin.

In the conductive composite of the present invention, a change in resistance value after a heat treatment at 150°C for 30 minutes is preferably 20% or less. When the lower layer of the conductive film layer is not provided with the thermosetting resin film, the resistance value changes by 20% or more, it is also possible to decrease the value to 20% or less by providing a thermosetting resin film containing the melamine resin. The reason why the resistance value of the conductive film is increased by the heat treatment, and the reason why a change in the resistance value can be suppressed by providing the thermosetting resin film are not clear. However, it is considered that the dispersing agent (A) reacts with a trace amount of the melamine resin eluted during the coating of the composition (B). There is assumed, as the heat treatment as used herein, heat history due to a post-process, for example, a conductive paste is coated so as to connect an external circuit to the peripheral edge portion of a substrate with a conductive film and a heat curing treatment is conducted. Therefore, heat treatment conditions vary according to the kind of the post-process. However, it is apparent that a heat treatment at about 100°C or higher for 30 minutes or more causes the same change in the resistance value as in the case of a heat treatment at 150°C for 30 minutes even under any conditions, and therefore approximate evaluation can be conducted under the conditions.

Regarding the thermosetting resin film in the substrate with a transparent conductive film, a contact angle of water of the surface is preferably 60 degrees or less. In order to adjust the contact angle of water to 60 degrees or less, the content of melamine resin in the thermosetting resin film may be adjusted to 50% by weight or more. The contact angle of water of the surface of a thermosetting resin film in the substrate with a transparent conductive film has a relationship with the contact angle of water of the surface of the thermosetting resin composition film before the coating of a composition (B) described hereinafter. Since polar groups such as a hydroxyl group contained in the thermosetting resin composition film is consumed by a crosslinking reaction through the heat treatment after the coating of the composition (B), the contact angle of water increases. Therefore, it is preferred to adjust the contact angle of water of the surface of the film of the thermosetting resin composition before the coating of the composition (B) to 40 degrees or less. Thus, the contact angle of water of the surface of the thermosetting resin film in the substrate with a transparent conductive film usually becomes 60 degrees or less.

The contact angle of water can be measured using a commercially available contact angle measuring apparatus. The contact angle is measured by the following procedure. In accordance with JIS R3257 (1999), 1 to 4 µL of water is dropped on a surface of a film under an atmosphere of room temperature of 25°C and humidity of 50% using a syringe, and a droplet is observed from a horizontal section and an angle between a tangent line of a droplet end and a film plane is determined.

Herein, a method of measuring a contact angle of water of surface of a thermosetting resin film in a substrate with a transparent conductive film includes a method in which a surface of a portion such as a substrate end, which was not coated with a solution for a transparent conductive film, is measured, or a method in which a transparent conductive film layer is polished of etched to expose a surface of a thermosetting resin film, and then the measurement is conducted, but may be any method.

The thickness of the thermosetting resin film is preferably 10 nm or more in view of an improvement in wettability and the strength, or preferably 10 µm or less in view of uniformity of the film thickness and stability of a coating process. More preferably, the thickness is within a range from 100 nm to 500 nm. An influence of coloration due to the thermosetting resin is suppressed by adjusting the thickness within the above range, thus making it possible to obtain thermosetting resin film which is excellent in uniformity of the thickness, strength and wettability.

When a film is used as the substrate, an under resin layer can be formed by offline coating or inline coating of a resin component. It is also possible to use a commercially available film such as a polyester film with an easy-adhesion layer "Lumilar^{®}" (manufactured by Toray Industries, Inc.). The method of confirming the presence of the under resin layer is not limited as long as it is a method capable of confirming lamination and, for example, it is possible to confirm by taking a cross section micrograph of the film using a transmission electron microscope. If necessary, the film may be stained. Even in case an interface between the under resin layer and the substrate is unclear and gradation is present, if a resin layer is recognized at one side (side opposite the substrate) of the gradation portion, it is recognized that the under resin layer is present.

It is also possible to preferably use a substrate in which the surface opposite the surface to be coated with the composition (B) is subjected to a hard coat treatment thereby imparting were resistance, high surface hardness, solvent resistance, stain resistance and fingerprint resistance. The substrate may have transparency or not.
It is preferred that a conductive composite having excellent transparency and conductivity can be obtained by using the substrate having transparency. The substrate having transparency means a substrate in which a transmittance of light having 550 nm is 50% or more.

The compound (C) in the present invention is represented by the following general formula (1):

(R¹)ₘMXₙ₋ₘ (1)

wherein R¹ represents one, or two or more kinds of groups selected from a hydrogen atom, an alkyl group, an acyl group, a vinyl group, an allyl group, a cyclohexyl group, a phenyl group, an epoxy group, a (meth)acryloxy group, an ureide group, an amide group, a fluoroacetamide group, an isocyanate group and a substituted derivative thereof and, when m is 2 or more, R¹(s) may be the same of different; M represents one, or two or more kinds of metal atoms capable of forming a metal alkoxide selected from metal atoms having a valence of n; X represents a halogen atom or represented by OR² and, when n - m is 2 or more, X(s) may be the same or different; R² represents one, or two or more kinds of groups selected from a hydrogen atom, an alkyl group, an acyl group, a vinyl group, an allyl group, a cyclohexyl group, a phenyl group, an epoxy group, a (meth)acryloxy group, an ureide group, an amide group, a fluoroacetamide group, an isocyanate group and a substituted derivative thereof; and m is 0 to (n-2), and n is 2 or more.

In R¹ of the above formula (1), the alkyl group is preferably an alkyl group having 1 to 10 carbon atoms, and specific examples thereof include a methyl group, an ethyl group, a n-propyl group, an i-propyl group, a n-butyl group, an i-butyl group, a sec-butyl group, a t-butyl group, a n-pentyl group, a n-hexyl group, a n-heptyl group, a n-octyl group, a 2-ethylhexyl group, or a substituted derivative thereof. The acyl group is preferably an acyl group having 1 to 6 carbon atoms, and specific examples thereof include a formyl group, an acetyl group, a propionyl group, a butyryl group, a valeryl group, a benzoyl group, a toluoyl group, a caproyl group, or a substituted derivative thereof. Examples of the epoxy group include a glycidyl group, a glycidylether group, or a substituted derivative thereof. Examples of the substituent include an alkyl group, a halogen atom and a nitro group.

In R² of the above formula (1), the alkyl group is preferably an alkyl group having 1 to 10 carbon atoms, and specific examples thereof include a methyl group, an ethyl group, a n-propyl group, an i-propyl group, a n-butyl group, an i-butyl group, a sec-butyl group, a t-butyl group, a n-pentyl group, a n-hexyl group, a n-heptyl group, a n-octyl group, a 2-ethylhexyl group, or a substituted derivative. The acyl group is preferably an acyl group having 1 to 6 carbon atoms, and specific examples thereof include a formyl group, an acetyl group, a propionyl group, a butyryl group, a valeryl group, a benzoyl group, a toluoyl group, a caproyl group, or a substituted derivative thereof. Examples of the epoxy group include a glycidyl group, a glycidylether group, or a substituted derivative thereof. Examples of the substituent of the substituted derivative include a mercapto group, and a substituted or unsubstituted amino group.

In X of the above formula (1), the halogen atom is preferably fluorine, chlorine, bromine or iodine. It is possible to select from one, two or more kinds of them. The number of carbon atoms of R¹ and R² is preferably 10 or less, and more preferably 5 or less, including the substituent in view of solvent solubility and coatability.

In the formula (1), M may be metal having a valence of n, capable of forming a metal alkoxide and is, for example, metal capable of forming a metal alkoxide composed of any one of metal elements of Group 3, Group 4, Group 5, Group 14 or Group 15 of the Periodic Table. The metal element is preferably silicon, titanium, aluminum or zirconium, and may be alone, or a combination of two or more kinds of them. In particular, organosilane wherein M is silicon, or a hydrolysate of organosilane can be preferably used in view of water resistance, film-forming properties and coating film tight adhesion.

In the formula (1), n is a valence of a metal atom and m is from 0 to (n-2). When these symbols are within the above range, a dispersing agent (A) having a hydroxyl group in the molecule in a conductive layer and a hydrolysate of a compound (C) capable of forming a metal alkoxide undergo a polycondensation reaction, and thus it is possible to improve water resistance and to form a coating film layer of metal oxide in the form of a crosslinked network on the conductive layer. Preferably, m is 0 and n is 4, or m is 1 and n is 4. More preferably, m is 0 and n is 4, such a compound is preferable because the polycondensate to be produced later has high water resistance, moist heat resistance and film strength. A combination of M with m and n is most preferably as follows: M is silicon, and m is 0 and n is 4.

Specific examples of the compound (C) of the above formula (1) wherein M is silicon, m is 0, and n is 4 include tetraalkoxysilanes such as tetramethoxysilane, tetraethoxysilane, tetra-n-propoxysilane, tetra-i-propoxysilane and tetra-n-butoxysilane.

Examples of the compound of the above formula (1) wherein M is silicon, m is 1, and n is 4 include trialkoxysilanes such as methyltrimethoxysilane, methyltriethoxysilane, ethyltrimethoxysilane, ethyltriethoxysilane, n-propyltrimethoxysilane, n-propyltriethoxysilane, i-propyltrimethoxysilane, i-propyltriethoxysilane, n-butyltrimethoxysilane, n-butyltriethoxysilane, n-pentyltrimethoxysilane, n-pentyltriethoxysilane, n-hexyltrimethoxysilane, n-heptyltrimethoxysilane, n-octyltrimethoxysilane, vinyltrimethoxysilane, vinyltriethoxysilane, cyclohexyltrimethoxysilane, cyclohexyltriethoxysilane, phenyltrimethoxysilane, phenyltriethoxysilane, N-(2-aminoethyl)-3-aminopropyltrimethoxysilane, N-(2-aminoethyl)-3-aminopropyltriethoxysilane, 3-chloropropyltrimethoxysilane, 3-chloropropyltriethoxysilane, 3,3,3-trifluoropropyltrimethoxysilane, 3,3,3-trifluoropropyltriethoxysilane, 3-aminopropyltrimethoxysilane, 3-aminopropyltriethoxysilane, 2-hydroxyethyltrimethoxysilane, 2-hydroxyethyltriethoxysilane, 2-hydroxypropyltrimethoxysilane, 2-hydroxypropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-isocyanatepropyltrimethoxysilane, 3-isocyanatepropyltriethoxysilane, 3-glycidoxypropyltrimethoxysilane, 3-glycidoxypropyltriethoxysilane, 2-(3,4-epoxycyclohexyl)ethyltrimethoxysilane, 2-(3,4-epoxycyclohexyl)ethyltriethoxysilane, 3-(meth)acryloxypropyltrimethoxysilane, 3-(meth)acryloxypropyltriethoxysilane, 3-ureidepropyltrimethoxysilane, 3-ureidepropyltriethoxysilane, vinyltrimethoxysilane, vinyltriethoxysilane, allyltrimethoxysilane and vinyltriacetoxysilane; and methyltriacetyloxysilane and methyltriphenoxysilane.

Specific examples of the compound (C) of the above formula (1) wherein M is titanium, m is 0, and n is 4 include titanium tetraisopropoxide, tetra-n-propyl orthotitanate, titanium tetra-n-butoxide and tetrakis(2-ethylhexyloxy)titanate.

Specific examples of the compound (C) of the above formula (1) wherein M is zirconium, m is 0, and n is 4 include zirconium tetraisopropoxide and zirconium tetra-n-butoxide. These compounds may be used alone, or two or more kinds of them may be used in combination.

Of these compounds, tetraalkoxysilanes is preferably used, and tetraethoxysilane, tetra-n-propoxysilane and tetra-n-butoxysilane are more preferably used.

As the compound (C) of the present invention, the above compounds may be directly used, and a hydrolysate can also be used. Hydrolysis can naturally occurs due to moisture in air, and the hydrolysate can be also be produced by dissolving the compound (C) in a solvent and hydrolyzing by optionally adding water and an acid or base (D) or an organotin compound which can serves as a catalyst. The hydrolysate may be a hydrolysate obtained by hydrolyzing at least one of OR² groups contained in the compound (C). However, it is preferred that a lot of groups are hydrolyzed so as to accelerate the polycondensation reaction.

The hydrolysate of the compound (C) can be produced by hydrolyzing the compound (C) in advance. For example, the compound (C) is dissolved in a solvent to obtain a uniform solution. The compound (C) is hydrolyzed by stirring for several minutes to 12 hours or more after optionally adding water and a catalyst. Since the degree of the hydrolysis reaction is insufficient, the subsequent polycondensation reaction is not sufficiently conducted and therefore the reaction time is preferably 30 minutes or more. When water is added, water may be independently added, or water or water described hereinafter contained in an organic solvent may be used. When water is independently added, the amount of water is preferably from 0.5 to 5 mol, more preferably from 0.7 to 3 mol, and particularly preferably from 0.7 to 2 mol, based on 1 mol of the compound (C).

In the present invention, the hydrolysate is not limited to a hydrolysate obtained by the method of hydrolyzing the compound (C) and may be a hydrolysate having a corresponding structure produced by another method. As the compound (C) in the present invention, a commercially available metal alkoxide may also be used. Examples of a commercially available metal alkoxide include a silane compound manufactured by Dow Corning Toray Co., Ltd. and silicate manufactured by COLCOAT CO., Ltd. These compounds may be monomers or oligomers. However, it is preferred that water resistance of a conductive layer due to condensation with a dispersing agent (A) having a hydroxyl group in the molecule can be improved by using the monomer. The oligomer in the compound (C) means a compound composed of 2 to 99 molecules of the same kind. These commercially available metal alkoxides may be directly used, or may be used after hydrolyzing. These compounds (C) and/or hydrolysates of the compounds (C) may be used alone, or two or more kinds of them may be used in combination.

It is preferred that a liquid containing a compound (C) and/or a hydrolysate of the compound (C) used in the present invention contains a solvent. The contents of the compound (C) and/or the compound (C) in the liquid are desirably 0.1% by weight or more in terms of the solid content. When the contents of the compound (C) and/or a hydrolysate of the compound (C) are less than 0.1% by weight, the coating film thus formed may become brittle. The upper limit is not limited, but is preferably 30% by weight or less in view of coatability.

It is preferred to select a solvent in which the compound (C) and/or a hydrolysate of the compound (C) is dissolved, and it is possible to use water, hydrocarbons (toluene, xylene, etc.), chlorine-containing hydrocarbons (methylene chloride, chloroform, chlorobenzene, etc.), ethers (dioxane, tetrahydrofuran, methyl cellosolve, etc.), ether alcohols (ethoxyethanol, methoxyethoxyethanol, etc.), esters (methyl acetate, ethyl acetate, etc.), ketones (cyclohexanone, methyl ethyl ketone, etc.), alcohols (methanol, ethanol, isopropanol, phenol, etc.), lower carboxylic acid (acetic acid, etc.), amines (triethylamine, trimethanolamine, etc.), nitrogen-containing polar solvents (N,N-dimethylformamide, nitromethane, N-methyl pyrrolidone, acetonitrile, etc.) and sulfur compounds (dimethyl sulfoxide, etc.).

It is preferred that the solvent contains water so as to enhance reactivity by further hydrolyzing the compound (C) and/or a partial hydrolysate of the compound (C). The content of water is determined taking the solubility and hydrolysis rate of the compound (C) into consideration.

It is preferred to use, as the catalyst for accelerating the polycondensation reaction of the compound (C) and/or a hydrolysate of the compound (C), an acid or base (D) in combination.

The acid or base (D) may be reacted by coating a liquid containing the compound (C) and/or a hydrolysate of the compound (C) in the second step after containing in the composition (B) in advance. The acid or base (D) may be reacted on a conductive layer in the second step after dissolving in the solvent, together with the compound (C) and/or a hydrolysate of the compound (C). After the first step and/or second step, the acid or base (D) may be coated as a third step. It is particularly preferred to react the acid or base (D) on the conductive layer in the second step after dissolving in the solvent, together with the compound (C) and/or a hydrolysate of the compound (C) because the polycondensation proceeds furthermore.

It is possible to use, as the acid, one kind selected from acidic components, for example, inorganic acids such as hydrochloric acid, sulfuric acid, nitric acid and boric acid; organic acids such as naphthenic acid, octylic acid, nitrous acid, sulfurous acid, aluminic acid, carbonic acid, acetic acid and citric acid; metal salts thereof; alkyltitanic acid, phosphoric acid, methanesulfonic acid, p-toluenesulfonic acid and phthalic acid, or a combination of two or more kinds of them. Examples of the base include one kind selected from sodium hydroxide; amine-based compounds such as ethylenediamine, hexanediamine, diethylenetriamine, triethylenetetramine, tetraethylenepentamine, piperidine, piperazin, metaphenylenediamine, ethanolamine and triethylamine; and ammonia, or a combination of two or more kinds of them. The acid or base (D) is appropriately selected by hydrolyzability of the compound (C) and/or a partial hydrolysate of the compound (C).

It is also preferred to use, as the compound capable of accelerating polycondensation by accelerating hydrolysis of the compound (C) and/or a partial hydrolysate of the compound (C), organotin compounds, for example, carboxylic acid type organotins such as (C₄H₉)₂Sn(OCOC₁₁H₂₃)₂ and (C₄H₉)₂Sn(OCOCH=CHCOOCH₃)₂; and reaction products of organotin oxides such as (C₄H₉)₂SnO, (C₈H₁₇)₂SnO, (C₄H₉)₂SnO and (C₈H₁₇)₂SnO with ester compounds such as ethyl silicate, dimethyl maleate, diethyl maleate and dioctyl phthalate in combination. The addition method of the organotin compound is the same as in the case of the acid or base (D).

The contents of the acid or base (D) and the organotin compound in the liquid containing the compound (C) and/or a hydrolysate of the compound (C) are preferably from 0.01 to 50 parts by weight, more preferably from 0.1 to 50 parts by weight, and still more preferably from 0.5 to 30 parts by weight, based on 100 parts by weight of the solid contents of the compound (C) and/or a hydrolysate of the compound (C), respectively.

When the conductive material used in the present invention is a carbon nanotube, a carbon nanotube having linearity and high crystallinity is preferably because of its high conductivity. The carbon nanotube having satisfactory linearity is a carbon nanotube which contains less defects and has high carbon nanotube crystallinity. Crystallinity of the carbon nanotube can be evaluated by Raman spectroscopic analysis. Although various laser wavelengths are used in Raman spectroscopic analysis, 633 nm is employed herein. A Raman shift observed at around 1590 cm⁻¹ in a Raman spectrum is called a graphite-derived G band, while a Raman shift observed at around 1350 cm⁻¹ is called a D band derived from amorphous carbon or defect of graphite. The carbon nanotube having a higher G/D ratio as a ratio of a peak height of the G band to the D band has higher linearity, higher crystallinity and higher quality.

The higher the G/D ratio, the better it becomes. It is possible to say that a carbon nanotube having the G/D ratio of 30 or more is a high quality carbon nanotube. The G/D ratio is preferably 40 or more, and more preferably 50 or more. The upper limit is not particularly limited, but is usually 200 or less. Raman spectroscopic analysis of a solid such as a carbon nanotube may vary depending on sampling. Therefore, Raman spectrochemical analysis is conducted at three different positions and an arithmetic mean thereof is determined.

The carbon nanotube is produced, for example, by the following procedure. A powdered catalyst obtained by supporting iron on magnesia is allowed to exist in a vertical reactor on the entire surface in a horizontal section direction of the reactor and methane is allowed to flow in a vertical direction in the reactor and then methane is brought into contact with the above catalyst at 500 to 1,200°C to produce a carbon nanotube. The carbon nanotube is subjected to an oxidation treatment. After the production, the proportion of a single- to five-walled carbon nanotube, particularly the proportion of a double-to five-walled carbon nanotube can be increased by subjecting the carbon nanotube to an oxidation treatment. The oxidation treatment is conducted, for example, by a method of a burning treatment. The temperature of the burning treatment is not particularly limited. Usually, the temperature is preferably selected within a range from 300 to 1,000°C. Since the oxidation temperature is influenced by an atmospheric air gas, the burning treatment is preferably conducted at a comparatively low temperature when the oxygen concentration is high, whereas, the burning treatment is preferably conducted at a comparatively high temperature when the oxygen concentration is low. The burning treatment of the carbon nanotube includes, for example, a burning g treatment conducted under atmospheric air at the temperature within a combustion peak temperature ±50°C of the carbon nanotube. It is preferred to select a temperature range lower than the above range when the concentration of oxygen is higher than that of atmospheric air, or to select a temperature range higher than the above range when the concentration of oxygen is lower than that of atmospheric air. When the burning treatment is conducted under atmospheric air, it is preferred to conduct at the temperature within a combustion peak temperature ±15°C of the carbon nanotube.

The combustion peak temperature of the carbon nanotube can be measured by thermal analysis. Thermal analysis under atmospheric air is conducted by placing about 10 mg of a sample in a differential thermal analyzer (for example, DTG-60 manufactured by Shimadzu Corporation) and raising from room temperature to 900°C in air at a temperature raising rate of 10°C/min. At that time, an exothermic peak temperature upon combustion of the sample can be determined. It is possible to remove impurities and a single-walled carbon nanotube having low durability in the carbon nanotube thus produced by subjecting to a burning treatment at the temperature within a determined combustion peak temperature ±50°C. Even when the burning treatment is conducted at the temperature lower by far than the combustion peak, i.e. a temperature lower than -50°C at this time, impurities and a single-walled carbon nanotube having low purity are not burned and removed, and thus purity of the single- to five-walled carbon nanotube carbon nanotube is not improved. Even when the burning treatment is conducted at a temperature higher by far than the combustion peak temperature, i.e. a temperature higher than 50°C, the entire carbon nanotube is burned and removed. Therefore, burning is preferably conducted at around the combustion peak temperature of the carbon nanotube. At this time, the burning treatment is preferably conducted at the temperature within the combustion peak temperature ±50°C. The larger the number of layers of the carbon nanotube, the higher the combustion temperature becomes. Therefore, it is preferred that purity of a single- to five-walled carbon nanotube having high purity can be improved by burning at the temperature within a range of ±50°C and purity of a double- to five-walled carbon nanotube can be improved by burning at the temperature within a range of -15°C to +50°C. When the temperature is within a range of ±15°C, the proportion of a double-walled carbon nanotube among the double- to five-walled carbon nanotube can be increased and thus 50 carbon nanotubes among 100 carbon nanotubes can be double-walled carbon nanotubes

It is also possible to use a method of conducting a burning treatment by intermittently contacting with oxygen or a mixed gas containing oxygen. When the burning treatment is conducted by intermittently contacting with oxygen or a mixed gas containing oxygen, it is possible to treat at a comparatively high temperature, for example, 500 to 1,000°C even when the oxygen concentration is high. This is because the reaction is immediately stopped when oxygen has been consumed even when oxidation occurs because oxygen or a mixed gas containing oxygen is allowed to intermittently flow. Thus, it becomes possible to control the oxidation reaction.

The reaction condition can be adjusted by increasing the burning treatment time when the burning temperature is low, whereas, the reaction condition can be adjusted by decreasing the burning treatment time when the burning temperature is high. The burning treatment time is usually from 5 minutes to 24 hours, preferably from 10 minutes to 12 hours, and more preferably from 30 minutes to 5 hours. The burning treatment is preferably conducted under atmospheric air, but may be conducted under an oxygen/inert gas having an adjusted oxygen concentration. At this time, the oxygen concentration is not particularly limited. The oxygen concentration may be appropriately set within a range from 0.1% to 100%. It is possible to use, as the inert gas, helium, nitrogen and argon.

As the oxidation treatment of the carbon nanotube, a treatment with hydrogen peroxide, a mixed acid or nitric acid can also be exemplified.

The treatment of carbon nanotube with hydrogen peroxide is conducted, for example, by mixing the above carbon nanotube so as to adjust the content within a range from 0.01% by weight to 10% by weight in commercially available 34.5% hydrogen peroxide water, and reacting the mixture at a temperature of 0 to 100°C for 0.5 to 48 hours.

The treatment of the carbon nanotube with a mixed acid is conducted, for example, by mixing the above carbon nanotube so as to adjust the content within a range from 0.01% by weight to 10% by weight in a mixed solution of concentrated sulfuric acid and concentrated nitric acid (3/1), and reacting the mixture at a temperature of 0 to 100°C for 0.5 to 48 hours. Regarding the mixing ratio of the mixed acid, a ratio of concentrated sulfuric acid to concentrated nitric acid can also be adjusted within a range from 1/10 to 10/1 according to the amount of the single-walled carbon nanotube in the carbon nanotube thus produced.

The treatment of the carbon nanotube with nitric acid is conducted, for example, by mixing the above carbon nanotube so as to adjust the content within a range from 0.01% by weight to 10% by weight in 40 to 80% by weight of commercially available nitric acid, and reacting the mixture at a temperature of 60 to 150°C for 0.5 to 48 hours. The carbon nanotube may be treated with an organic amine after subjecting to the acid treatment. It is considered that the remaining mixed acid can be decreased by treating with the organic amine, and that separation from the carbon nanotube is more improved by converting an acidic group such as a carboxyl group, which is considered to be produced in impurities such as amorphous carbon, into a salt. In other words, solubility of impurities subjected to a mixed acid treatment increases and it becomes possible to easily separate the carbon nanotube from impurities by filtration. Of the organic amine, lower amines such as methylamine, ethylamine, propylamine, dimethylamine, diethylamine and dipropylamine are preferable, and ethylamine and propylamine are more preferable.

These oxidation treatments may be used alone, or some oxidation treatments may be used in combination. It becomes possible to selectively remove impurities such as amorphous carbon and a single-walled CNT having low heat resistance in the product by conducting these oxidation treatments, and thus purity of a single- to five-walled carbon nanotube, particularly a double- to five-walled carbon nanotube can be improved. In particular, it is preferred that purity of a double-walled carbon nanotube by an oxidation treatment with nitric acid.

These oxidation treatments may be conducted immediately after the synthesis of the carbon nanotube, or after another purification treatment. When iron/magnesia is used as a catalyst, a purification treatment for removal of the catalyst may be conducted using an acid such as hydrochloric acid after the burning treatment, or an oxidation treatment may be conducted after the purification treatment for removal of the catalyst using an acid such as hydrochloric acid.

Next, a composition (B) is prepared using the carbon nanotube obtained above and a dispersing agent (A) having a hydroxyl group in the molecule. There is no particular limitation on the method of producing a composition (B).

The composition (B) can be produced, for example, by mixing a conductive material such as the carbon nanotube obtained above, a dispersing agent (A) having a hydroxyl group in the molecule, and a solvent using a mixing disperser used commonly in the production of a salve, for example, a ball mill, a beads mill, a sand mill, a roll mill, a homogenizer, an ultrasonic homogenizer, a highpressure homogenizer, an ultrasonic device, an atriter, a dissolver or a paint shaker. In particular, it is preferred to disperse using ultrasonic wave because dispersibility of the conductive material of the composition (B) is improved. The conductive material to be dispersed may be in a dry state or a state of containing a solvent. However, it is preferred to disperse in the state of containing a solvent without drying after purification because dispersibility is improved. It is possible to preferably use, as a preferable solvent, a solvent containing a dispersing agent (A) having a hydroxyl group in the molecule dissolved therein. In particular, water or an alcohol is preferable.

The composition (B) is preferably fractionated by centrifugal separation, filter filtration or gel filtration before coating. For example, by centrifugal separation of the composition (B), an undispersed conductive material, an excess amount of a dispersing agent, and a metal catalyst which may be incorporated during the synthesis of a conductive material are precipitated. When a centrifugal supernatant is collected, the undispersed conductive material and impurities can be removed as precipitates, thus making it possible to prevent reaggregation of the conductive material and to improve stability of the composition. Furthermore, in a strong centrifugal force, separation is conducted according to sizes such as thickness and length of the conductive material and thus a light transmittance of the coating film can be improved. The centrifugal force in the case of centrifugal separation may be 100 G or more, preferably 1,000 G or more, and more preferably 10,000 G or more. The upper limit is not particularly limited, but is preferably 2,000,000 G or less in view of performances of a common ultracentrifuge.

The filter to be used in filter filtration can be appropriately selected from filters having a pore size within a range from 0.05 µm to 0.2 µm. Thus, it is possible to remove those having a comparatively large size among the undispersed conductive material and impurities which may be incorporated during the synthesis of a conductive material.

In the case of fractionation in such a manner, the mixing ratio fractionation is determined taking the amount to be fractionated into consideration. The mixing ratio before size fractionation is decided by a method in which a precipitate remaining after centrifugal separation and a fractionated product remaining on the filter are dried, burned at 400°C for 1 hour and weighed, and then the concentration is calculated. As a result of such size fractionation, the conductive material can be separated by the length of the conductive material, the number of layers, and the presence or absence of a bundle structure.

This composition (B) can optionally contain, in addition to the above dispersing agent (A) having a hydroxyl group in the molecule, additives such as other surfactants and various polymer materials as long as the effects of the present invention are not adversely affected.

The above surfactants and a certain polymer material are useful for further improving dispersibility and dispersion stabilizability of the conductive material. The surfactants are classified into ionic surfactants and nonionic surfactants. In the present invention, it is preferred to use nonionic surfactants in view of satisfactory moist heat resistance. The following nonionic surfactants are exemplified. These surfactants can be used alone, or two or more kinds of them can be used in combination.

Examples of nonionic surfactants include sugar ester-based surfactants such as sorbitan fatty acid ester and polyoxyethylene sorbitan fatty acid ester; fatty acid ester-based surfactants such as polyoxyethylene resin acid ester and polyoxyethylene fatty acid diethyl; ether-based surfactants such as polyoxyethylene alkyl ether, polyoxyethylene alkyl phenyl ether and polyoxyethylene polypropylene glycol; and aromatic nonionic surfactants such as polyoxyalkylene octyl phenyl ether, polyoxyalkylene nonyl phenyl ether, polyoxyalkyl dibutyl phenyl ether, polyoxyalkyl styryl phenyl ether, polyoxyalkyl benzyl phenyl ether, polyoxy alkyl bisphenyl ether and polyoxyalkyl cumyl phenyl ether. Of these surfactants, aromatic nonionic surfactants are preferable because of excellent dispersibility, dispersion stability and increase in concentration.

It is also possible to use, in addition to surfactants, various polymer materials such as conductive or non-conductive polymers which can be added in addition to the conductive material.

The method of providing an under resin layer on a substrate before a first step of coating a composition (B) will be described by way of the case where the under resin layer is a heat cured resin film as an example. The thermosetting resin can be coated in the form of a solution after dissolving in a solvent. Examples of the solvent include, but are not limited to, water, methanol, ethanol, propanol, isopropanol, butanol, toluene, xylene, o-chlorophenol, acetone, methyl ethyl ketone, methyl isobutyl ketone, cyclohexanone, dioxane, ethyl acetate, isobutyl acetate, tetrahydrofuran, propylene carbonate, ethylene glycol, methyl cellosolve, ethyl cellosolve, methyl cellosolve acetate, propylene glycol, propylene glycol acetate, propylene glycol acetate monomethyl ether, chloroform, trichloroethane, trichloroethylene, chlorobenzene, dichlorobenzene, trichlorobenzene, dimethylformamide, dimethyl sulfoxide, N-methyl pyrrolidone and γ-butyrolactone, and the solvent can be optionally selected. Two or more kind of them may be used.

Examples of the method of coating a thermosetting resin solution on a substrate include a cast method, a spin coating method, a dip method, a bar coater method, a spray method, a blade coating method, a slit die coating method, a gravure coating method, a reverse coating method, a screen printing method, a cast coating method, a print transfer method, a dip and pull-up method and an ink-jet method. The coating method may be selected according to target coating film characteristics such as thickness of a coating film and adjustment of orientation.

In the under resin layer formed in this step, a contact angle of water at 25°C of the surface is preferably 40 degrees or less. By adjusting the contact angle of water to 40 degrees or less, the composition (B) can be uniformly coated on the surface of the under resin layer and a conductive layer having excellent uniformity and tight adhesion can be formed without generating unevenness during drying.

A method of coating a composition (B) as a first step will be described below. It is possible to employ, as the coating method, known coating methods such as spray coating, dip coating, roll coating, spin coating, doctor knife coating, kiss coating, slit coating, die coating, slit die coating, gravure coating, microgravure coating, blade coating, wire bar coating and extrusion coating methods; and various printing methods such as screen printing, gravure printing, ink-jet printing and pad printing methods. Coating may be conducted many times and different two kinds of coating methods may be used in combination. Most preferred coating method is a microgravure coating or wire bar coating method.

The coating thickness (wet thickness) also depends on the concentration of the coating liquid, and is not particularly defined as long as desired conductivity is obtained. In particular, the coating thickness is preferably from 0.01 µm to 50 µm, and more preferably from 0.1 µm to 20 µm. The coating thickness (dry thickness) can be measured by observing a cross section of a conductive composite. For example, it can be observed under a transmission electron microscopy and staining may be optionally conducted. Preferable dry thickness is not defined as long as desired conductivity can be obtained. The coating thickness is preferably from 0.001 µm to 5 µm, and more preferably from 0.001 to 1 µm.

When the composition (B) is an aqueous dispersion liquid, a wetting agent may be added in the composition in the case of coating on a substrate. In the case of coating on a non-hydrophilic substrate, the composition (B) can be coated without repelling by the substrate by adding the wetting agent such as a surfactant or an alcohol. In particular, an alcohol is preferable, and methanol, ethanol, propanol or isopropanol is more preferable. Since a lower alcohol such as methanol, ethanol or isopropanol has high volatility, it can be easily removed when the substrate is dried after coating. In some cases, a mixed liquid of an alcohol and water may be used.

After coating the composition (B) on the substrate, it is preferred that unnecessary solvent is removed by a method such as air drying, heating or evacuation and the conductive layer thus formed is dried. Thus, the conductive material forms a three-dimensional network structure which is fixed to the substrate. Drying by heating is particularly preferable. The drying temperature may be the temperature at which the solvent can be removed, and also the temperature which is a heat resisting temperature or lower of the substrate. In the case of a substrate made of a resin, the drying temperature is preferably from 0°C to 250°C, and more preferably from 15°C to 150°C.

After drying, the non-conductive component in the conductive layer can also be removed with a proper solvent. It is also possible to thermally decompose the non-conductive component by heating. This operation facilitates distribution of charges and improves conductivity of the conductive composite.

The solvent for removal of the above component is not particularly limited as long as it dissolves a component which decreases transparent conductivity to be removed, for example, additives and an excess amount of a dispersing agent (A) having a hydroxyl group in the molecule and also does not remove the conductive material, and may be an aqueous solvent or a non-aqueous solvent. Specific examples thereof include aqueous solvents such as water, alcohols and acetonitrile; and non-aqueous solvents such as chloroform and toluene. The method of removing the above component includes a method of drying a conductive layer and dipping in a solvent, or spraying a solvent on a conductive layer.

It is preferred that a hydrolysate of a compound (C) (including those obtained by further hydrolyzing a partial hydrolysate) is prepared in a high concentration and diluted with a solvent before use. In that case, in the high concentration solution, the contents of a compound (C) and/or a partial hydrolysate of the compound (C) are preferably from 150 to 300 parts by weight based on 100 parts by weight of the solvent, and the contents of an acid or base (D) and an organotin compound are preferably from 30 parts by weight to 70 parts by weight based on 100 parts by weight of the solvent, respectively.

The solvent used in the case of dilution may be the same as or different from the preparation solvent. A solvent having a boiling point at a normal temperature of 120°C or less is preferable in view of coatability. It is possible to preferably use, for example, water, hydrocarbons (toluene, xylene, etc.), chlorine-containing hydrocarbons (methylene chloride, chloroform, chlorobenzene, etc.), ethers (dioxane, tetrahydrofuran, methyl cellosolve, etc.), ether alcohols (ethoxyethanol, methoxyethoxyethanol, etc.), esters (methyl acetate, ethyl acetate, etc.), ketones (cyclohexanone, methyl ethyl ketone, etc.), alcohols (methanol, ethanol, isopropanol, butanol, phenol, etc.), lower carboxylic acids (acetic acid, etc.), amines (triethylamine, trimethanolamine, etc.), nitrogen-containing polar solvents (N, N-dimethylformamide, nitromethane, N-methyl pyrrolidone, acetonitrile, etc.) and sulfur compounds (dimethyl sulfoxide, etc.). Of these solvents, alcohol-based solvents and toluene are suitable. These solvents can be used alone, or a mixed solvent of two or more kinds of them can be used.

After the second step of coating a liquid containing a compound (C) and/or a hydrolysate of the compound (C), it is preferred to conduct drying and/or heating so as to accelerate the polycondensation reaction. In that case, when the temperature becomes higher and higher, the polycondensation reaction further proceeds to form a firm film. When the substrate is a resin film, the temperature is usually from 10 to 300°C, and preferably from 80 to 200°C, in view of heat resistance.

The coating method of the liquid containing a compound (C) and/or a hydrolysate of the compound (C) is not limited and the same coating method as in the case of the composition (B) can be used.

The coating weight of the liquid containing a compound (C) and/or a hydrolysate of the compound (C) is preferably from 0.001 to 1 g/m² so as to obtain sufficient water resistance, strength, moist heat resistance and film-forming properties without inhibiting conductivity of the conductive layer.

The acid or base (D) may be coated after the first step or the second step. The coating method is not particularly limited and the same coating method as in the case of the composition (B) can be used.

The coating weight of the acid or base (D) may be the amount which enables sufficient proceeding of the hydrolysis reaction of proceeding of the subsequent polycondensation, and is preferably from 0.05 to 50 parts by weight, and more preferably from 0.5 to 30 parts by weight, based on 100 parts by weight of the solid content of the compound (C) and/or a hydrolysate of the compound (C).

After coating, it is preferred to conduct drying and/or heating so as to accelerate the polycondensation reaction. In that case, when the temperature becomes higher and higher, the polycondensation reaction further proceeds to form a firm film. When the substrate is a resin film, the temperature is usually from 10 to 300°C, and preferably from 80 to 200°C, in view of heat resistance.

In the conductive composite of the present invention, a conductive layer is formed on a substrate and the conductive layer is coated with a coating layer of a polycondensate of a compound (C) and/or a hydrolysate of the compound (C). The conductive layer contains a conductive material and a dispersing agent (A) having a hydroxyl group in the molecule and/or a derivative thereof. As used herein, the derivative of the dispersing agent (A) having a hydroxyl group in the molecule is a condensate of a dispersing agent (A) having a hydroxyl group in the molecule and a compound (C) and/or a hydrolysate of the compound (C).

In the conductive composite of the present invention, it is possible to improve a transmittance by the antireflection effect of a coating layer of a polycondensate composed of a compound (C) and/or a hydrolysate of the compound (C) formed on the conductive layer, when compared with the coating layer before coating. It is also possible to decrease haze because the surface of the conductive composite becomes flat by the coating layer. It is also possible to improve conductivity of the conductive composite because the coating layer is effective to distribution and transfer of charges.

Regarding the polycondensate of the compound (C) and/or a hydrolysate of the compound (C), an -M-O-M- bond or -M-O- (dispersing agent (A) residue) bond is formed by polycondensation of the compound (C) and/or a hydrolysate of the compound (C) with hydroxyl groups in the compound (C) and/or a hydrolysate of the compound (C)or hydroxyl groups of a dispersing agent (A) having a hydroxyl group in the molecule. Chemical states of the compound (C) and a hydrolysate thereof and a dispersing agent (A) having a hydroxyl group in the molecule can be analyzed, for example, by X-ray photoelectron spectroscopy (XPS).

As described above, the conductive composite of the present invention exhibits excellent transparency and low haze. A ratio of a transmittance of light having 550 nm to a transmittance of light having 550 nm of a substrate is preferably 50%, more preferably 60% or more, still more preferably 70% or more, further preferably 80% or more, and still further preferably 90% or more. A haze value of visible light is preferably about 2.0% or less, more preferably less than 1.0%, and still more preferably less than 0.5%.

The total thickness of the coating layer made of a polyconensate of a compound (C) and/or a hydrolysate of the compound (C) and the conductive layer is preferably from 0.005 to 1 µm, and more preferably from 0.005 to 0.5 µm, so as to achieve the above transparency. This thickness of the conductive layer can be observed by a transmission electron microscope. Specifically, a cross section of the conductive composite obtained by the above method is observed at a magnification of 20,000 times using a transmission electron microscope and the thickness at ten positions extracted at random in the visual field measuring 1 µm by 1 µm is measured, and then the evaluation is conducted by an arithmetic mean.

There is not a clear interface between the coating layer and the conductive layer, and concentration gradient may be present. It is particularly preferred that, in the coating layer and the conductive layer, a polycondensate of the compound (C) and/or a hydrolysate of the compound (C) has concentration gradient from the surface layer to the substrate side, and the surface layer has a higher concentration than that of the substrate side in view of water resistance, moist heat resistance and strength of the conductive layer. It is preferred that a polycondensate of the lower layer (substrate side) of the conductive layer has a low concentration because water resistance can be improved while improving conductivity. It is preferred that the compound (C) is hydrolyzed in advance and dried immediately after coating on the conductive layer so as to increase the content of the polycondensate in the upper layer. The proportion of the compound (C) in the conductive layer can be determined, for example, by observing a cross section of a conductive composite using a transmission electron microscopy, followed by element mapping. A chemical state can be analyzed, for example, by X-ray photoelectron spectroscopy (XPS).

A moist heat resistance test of a conductive composite is conducted by standing the conductive composite under constant temperature and humidity conditions for a given time using a thermo-hygrostat. Before and after a moist heat treatment, surface resistance is measured and moist heat resistance of the conductive composite is evaluated by a surface resistance change ratio. The surface resistance change ratio is the value obtained by dividing surface resistance after moist heating by surface resistance before moist heating. The smaller and constant surface resistance change ratio is better. The surface resistance change ratio of the single-walled carbon nanotube and double- to five-walled carbon nanotube is lower than that of the multi-walled carbon nanotube, and the surface resistance change ratio of the double- to five-walled carbon nanotube is preferably lower than that of the single-walled carbon nanotube, and furthermore the double-walled carbon nanotube is preferable.

In the conductive composite of the present invention, the surface resistance change ratio measured by a measuring method described hereinafter after the moist heat resistance test under the conditions of 60°C and 90%RH for 250 hours is preferably within a range from 0.5 to 1.5, and more preferably from 0.5 to 1.2.

In the conductive composite of the present invention, when the conductive material is a carbon nanotube, a transmittance of light having 550 nm and surface resistance of the conductive composite can be easily adjusted by the coating weight of the carbon nanotube. Provided that a light transmittance and surface resistance are values which have a mutually conflicting relationship as follows. That is, when the coating weight is decreased, the light transmittance becomes high while the surface resistance increases. In contrast, when the coating weight is increased the surface resistance decreased while the light transmittance becomes lower. Therefore, the coating weight is adjusted by desired surface resistance and light transmittance. When the coating weight is from 1 mg/m² to 40 mg/m², it is possible to adjust a ratio of a transmittance of light having 550 nm of the conductive composite to a transmittance of light having 550 nm of the substrate to 50% or more. The surface resistance of the conductive composite can be adjusted within a range from 10¹ to 10⁴ Ω/□.

It is possible to adjust a ratio of a transmittance of light having 550 nm of the conductive composite to a transmittance of light having 550 nm of the substrate to 50% or more when the coating weight is adjusted to 40 mg/m² or less. Furthermore, the ratio can be adjusted to 60% or more when the coating weight is adjusted to 30 mg/m² or less, the ratio can be adjusted to 70% or more when the coating weight is adjusted to 20 mg/m² or less, and the ratio can be adjusted to 80% or more when the coating weight is adjusted to 10 mg/m² or less, and therefore it is preferred.

The surface resistance of the conductive composite can be adjusted to 10⁴ Ω/□ or less when the coating weight of the carbon nanotube is adjusted to 1 mg/m² or more, although it varies depending the dispersing agent (A) having a hydroxyl group in the molecule and the contents of various additives. The surface resistance can be adjusted to 10⁴ Ω/□ or less when the coating weight of the carbon nanotube is adjusted to 1 mg/m² or more, the surface resistance can be adjusted to 10³ Ω/□ or less when the coating weight is adjusted to 10 mg/m² or more, the surface resistance can be adjusted to 10² Ω/□ or less when the coating weight is adjusted to 20 mg/m² or more, and the surface resistance can be adjusted to 10¹ Ω/□ or less when the coating weight is adjusted to 30 mg/m² or more.

The conductive composite of the present invention has moist heat resistance, water resistance and high conductivity and can be used as clean room members such as antielectric shoes and antielectric plates, and display and automobile members such as electromagnetic shielding, near infrared shielding, transparent electrodes, touch panels and radio wave absorption. The conductive composite exhibits particularly excellent performances for applications of touch panels.

The touch panel includes a resistant film type touch panel and an electrostatic capacity type touch panel. The resistant film type touch panel is a touch panel wherein, when two transparent conductive films are disposed opposing each other, and are pressed by fingers after applying a voltage, a voltage corresponding to the pressed position is generated, and thus an operation position is discriminated by detecting the voltage. The resistant film type touch panel has the constitution in which an upper supporting substrate is laminated on a lower supporting substrate using a double-faced adhesive tape, and the upper and lower supporting substrates are provided with electrodes opposing each other. Dot spacers retain a gap between the upper and supporting substrates. A top surface of the upper supporting substrate is a surface to be contacted with a finger or a pen point, and a hard coat layer is provided so as to prevent scratching. The touch panel with the above constitution is, for example, used after attaching a lead wire and a drive unit and then assembling into a front of a liquid crystal display.

The present invention will be specifically described by way of Examples. However, the present invention is not limited to the following Examples.

### EXAMPLES

In Example, various measurements were conducted by the following procedures.

### Light transmittance

A conductive composite was packed in a spectrophotometer (U-2100, manufactured by Hitachi, Ltd.) and a light transmittance at a wavelength of 550 nm was measured.

### Surface resistance

Surface resistance was measured by a four-probe method defined in JISK7194 (established in 1994) using Loresta EP MCP-T360 (manufactured by DIA INSTRUMENTS CO., LTD.).

### Haze

Haze was measured using a full-automatic direct reading haze computer meter, Model HGM-2DP manufactured by Suga Test Instruments Co., Ltd.

### G/D ratio of carbon nanotube

A powder sample was placed in a resonance Raman spectrometer (INF-300, manufactured by HORIBA JOBIN YVON Co., Ltd.) and Raman spectrochemical analysis was conducted using a laser wavelength of 633 nm. In the measurement, analysis was conducted at three different positions and the heights of a G band and a D band were measured. A G/D ratio was determined at each height and an arithmetic mean thereof was determined.

### Moist heat resistance test of conductive composite

Using a thermo-hygrostat (LKL-112, manufactured by ESPEC CORP.), a conductive composite was allowed to stand under the conditions of a temperature of 60°C and a humidity of 90%RH for 250 hours. Surface resistances before and after a moist heat treatment were measured and moist heat resistance of the conductive composite was evaluated by a surface resistance change ratio. The surface resistance change ratio is the value determined by dividing surface resistance after a moist heat treatment by surface resistance after a moist heat treatment. After the moist heat treatment, the conductive composite is taken out from the thermo-hygrostat and allowed to stand at room temperature for 1 hour, surface resistance is measured.

### Contact angle of water

1 to 4 µL of water was dropped on a surface of a film under an atmosphere of room temperature of 25°C and a humidity of 50% using a syringe. Using a contact angle meter (contact angle meter, Model CA-D, manufactured by Kyowa Interface Science Co., Ltd.), a droplet is observed from a horizontal section and an angle between a tangent line of a droplet end and a film plane is determined.

### Tight adhesion

According to the same manner as defined in JIS K5600-5-6 (1999, cross-cut method), except that no cut line was formed on a surface of a film was not formed, a tape peeling test was conducted. An adhesive tape "Cellotape^{®}" (CT405A-18) manufactured by NICHIBAN CO., LTD. was tightly adhered on a surface of a conductive film, completely, by rubbing using fingers. After standing for 1 minute, the adhesive tape was peeled by grasping one end over about 1 second while maintaining an angle of 60° to the surface of the film. A change in surface resistance before and after tape peeling was evaluated. Values measured at three different points of the same sample were averaged.

### Linearity of resistance

In a state where 5 V is applied to a direction of 20 cm of a substrate sample cut into a size measuring 5 cm × 20 cm from a substrate with a conductive film, a relationship between the distance from one electrode and the voltage was measured at intervals of 2 cm. The largest value of a deviation ΔE (=|E1-E0|) between an ideal voltage value E0 and a measured voltage E1 at each point was denoted as ΔEmax and (ΔEmax/E0) × 100 at the pint was regarded as linearity (%).

### (Reference Example 1)

A carbon nanotube was obtained as follows.

### (Preparation of catalyst)

Ammonium iron citrate (green) (manufactured by Wako Pure Chemicals Industries, Ltd.) (2.459 g) was dissolved in 500 mL of methanol (manufactured by KANTO CHEMICAL CO., INC.). To this solution, 100 g of light magnesia (manufactured by Iwatani Corporation, bulk density is 0.125 g/mL) was added, followed by stirring at room temperature for 60 minutes. Methanol was removed by drying under reduced pressure while stirring from 40°C to 60°C to obtain a catalyst in which a metal salt is supported on a light magnesia powder.

### (Production of carbon nanotube composition)

A carbon nanotube was synthesized by a fluid bed vertical reactor shown in Fig. 1. Fig. 1 is a schematic view of the above fluid bed vertical reactor. A reactor 100 is a cylindrical quartz tube measuring 32 mm in inner diameter and 1,200 mm in length. The reactor is provided with a quartz sintered plate 101 at the center, an inert gas and raw gas feeding line 104 at the lower portion of the quartz tube, and a waste gas line 105 and a catalyst charging line 103 at the upper portion. The reactor is provided with a heater 106 surrounding the periphery of the reactor so as to maintain the reactor at any temperature. The heater 106 is provided with an inspection door 107 so as to confirm a flow state in the reactor.

After weighing 12 g of a catalyst, a catalyst 108 prepared as described above was set on a quartz sintered plate 101 from a sealed type catalyst feeder 102 through a catalyst charging line 103. Then, feeding of an argon gas through raw a gas feeding line 104 was started at 1,000 mL/minute. After replacing the atmosphere in the reactor by an argon gas, the temperature was raised to 850°C over 30 minutes.

After reaching 850°C, the temperature was maintained and an argon gas flow of the raw gas feeding line 104 was increased to 2,000 mL/minute and fluidization of the solid catalyst on the quartz sintered plate was started. After confirming the fluidization from the inspection door 107, feeding of methane to the reactor was started at 95 mL/minute (methane concentration: 4.5 vol%). After feeding the mixing gas for 90 minutes, the synthesis was completed by changing to the flow of only an argon gas.

After stopping heating and standing to room temperature, the catalyst and a carbon nanotube composition containing a carbon nanotube were taken out from the reactor when the temperature reached room temperature. A combustion peak temperature of the carbon nanotube composition with the catalyst by differential thermal analysis was 456°C.

The above carbon nanotube composition with the catalyst (23.4 g) was placed on a porcelain dish (150 (ϕ), subjected to a burning treatment in a muffle furnace (FP41, manufactured by Yamato Scientific Co., Ltd.) heated to 446°C in advance under atmospheric air at 446°C for 2 hours and then taken out form the muffle furnace. In order to remove the catalyst, the carbon nanotube composition was added to an aqueous 6 N hydrochloric acid solution, followed by stirring at room temperature for 1 hour. The product collected by filtration was further added to an aqueous 6 N hydrochloric acid solution, followed by stirring at room temperature for 1 hour. The solution was filtered and washed several times with water and then the filtered substance was dried overnight in an oven at 120°C to obtain 57.1 mg of a carbon nanotube composition in which magnesia and metal have been removed. The above operation was repeated to prepare 500 mg of a carbon nanotube composition in which magnesia and metal have been removed.

The carbon nanotube composition thus obtained was observed by a high resolution transmission electron microscope. As a result, the carbon nanotube is composed of a beautiful graphite layer and a carbon nanotube composed of two layers was observed. Among total carbon nanotubes (100 carbon nanotubes) observed, 84 carbon nanotubes were double-walled carbon nanotubes. As a result of Raman spectrochemical analysis at a wavelength of 633 nm of the carbon nanotube composition, a G/D ratio was 75.

The carbon nanotube composition (80 mg) was added to 27 mL of concentrated nitric acid (manufactured by Wako Pure Chemicals Industries, Ltd., extra pure, Assay 60 to 61%), followed by heating in an oil bath at 130°C for 5 hours while heating. After completion of the stirring while heating, the nitric acid solution containing the carbon nanotube was filtered and washed with distilled water, and then the carbon nanotube composition was stored in a water-containing wet state. At this time, the weight of the entire carbon nanotube composition in the water-containing wet state was 1266.4 mg. The carbon nanotube composition (377.1 mg) was partially taken out and then dried overnight at 120°C to obtain 17.0 mg of a carbon nanotube in a dry state. Therefore, the concentration of the carbon nanotube in the water-containing wet state was 4.5% by weight after a nitric acid treatment and the yield of the nitric acid treatment was 71%. The carbon nanotube composition thus obtained was observed by a high resolution transmission electron microscope. As a result, the carbon nanotube is composed of a beautiful graphite layer and a carbon nanotube composed of two layers was observed. Among total carbon nanotubes (100 carbon nanotubes) observed, 88 carbon nanotubes were double-walled carbon nanotubes.

### (Reference Example 2)

### (Preparation of hydrolysate of the compound (C))

In a 100 mL plastic container, 20 g of ethanol was charged and 40 g of tetra-n-butoxysilane was added, followed by stirring for 30 minutes. Thereafter, 10 g of an aqueous 0.1 N hydrochloric acid solution was added, followed by stirring for 2 hours to obtain a liquid containing a hydrolysate of tetra-n-butoxysilane. The obtained liquid was stored at 4°C and used next day.

### (Example 1)

### (Preparation of dispersion liquid containing carbon nanotube and carboxymethyl cellulose)

In a 50 mL container, 10 mg (on dry basis) of the carbon nanotube obtained in Reference Example 1 and 10 mg of sodium carboxymethyl cellulose (manufactured by Sigma, 90kDa, 50-200cps) were weighed and distilled water was added to make 10 g and the mixture was subjected to a dispersion treatment under ice cooling for 20 minutes using an ultrasonic homogenizer having an output of 20 W to prepare a carbon nanotube dispersion liquid. The obtained liquid was centrifuged at 10,000 G for 15 minutes using a high-speed centrifugal separator to obtain 9 mL of a supernatant. At this time, 1 mL of the remaining liquid was filtered through a filter having a pore diameter of 1 µm and washed, and then the obtained filtered substance was dried at 120°C by a dryer. The weight was measured. As a result, it was 1.4 mg. Therefore, it was found that 8.6 mg (0.86 mg/ mL) of the carbon nanotube is dispersed in the supernatant.

### (Conductive composite containing carbon nanotube and carboxymethyl cellulose)

To 950 µL of the carbon nanotube dispersion liquid of the supernatant obtained above after centrifugation, 50 µL of ethanol was added as a wetting agent and the obtained liquid was coated on a polyethylene terephthalate (PET) film (manufactured by Toray Industries, Inc., 188 µm, light transmittance: 91.2%, 15 cm × 10 cm) with a polyester resin surface resin layer (dry thickness: 80 nm) using a bar coater (No. 5, coating thickness: 7.5 µm, coating weight of a carbon nanotube: 6.1 mg/m²), air-dried and then dried in a dryer at 120°C for 2 minutes thereby fixing the carbon nanotube. The obtained coating film had surface resistance of 6.5 × 10² Ω/□ and a light transmittance of 81.1% (transmittance of light having 550 nm of a transparent conductive film/transmittance of light having 550 nm of a substrate = 89%), and also exhibited high conductivity and transparency.

### (Conductive composite coated with hydrolysate of the compound (C))

On the surface coated with a carbon nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes and then heated. The obtained coating film had surface resistance of 7.5 × 10² Ω/□ and a light transmittance of 83.4% (transmittance of light having 550 nm of a transparent conductive film/transmittance of light having 550 nm of a substrate = 91%) and the transmittance was improved when compared with that before coating. A cross section of the transparent conductive film was observed by a transmission electron microscope. As a result, the total thickness of the conductive layer and the coating layer was 120 nm. Before and after the moist heat resistance test, surface resistance was measured. As a result, a change ratio of surface resistance was 1.0.

### (Example 2)

### (Preparation of dispersion liquid containing carbon nanotube and cholic acid)

In a 50 mL container, 10 mg (on dry basis) of the carbon nanotube obtained in Reference Example 1 and 10 mg of sodium cholate (manufactured by Tokyo Chemical Industry Co., Ltd.) were weighed and distilled water was added to make 10 g and the mixture was subjected to a dispersion treatment under ice cooling for 20 minutes using an ultrasonic homogenizer having an output of 20 W to prepare a carbon nanotube dispersion liquid. The obtained liquid was centrifuged at 10,000 G for 15 minutes using a high-speed centrifugal separator to obtain 9 mL of a supernatant. At this time, 1 mL of the remaining liquid was filtered through a filter having a pore diameter of 1 µm and washed, and then the obtained filtered substance was dried at 120°C by a dryer. The weight was measured. As a result, it was 1.2 mg. Therefore, it was found that 8.8 mg (0.88 mg/ mL) of the carbon nanotube is dispersed in the supernatant.

### (Conductive composite containing carbon nanotube and cholic acid)

The carbon nanotube dispersion liquid of the supernatant obtained above after centrifugation was coated on a polyethylene terephthalate (PET) film (manufactured by Toray Industries, Inc., 188 µm, light transmittance: 91.2%, 15 cm × 10 cm) with a polyester resin surface resin layer (dry thickness: 80 nm) using a bar coater (No. 8, coating thickness: 12 µm, coating weight of a carbon nanotube: 10 mg/m²), air-dried and then dried in a dryer at 120°C for 2 minutes thereby fixing the carbon nanotube. The obtained coating film had surface resistance of 7.5 × 10² Ω/□ and a light transmittance of 79.2% (transmittance of light having 550 nm of a transparent conductive film/transmittance of light having 550 nm of a substrate = 87%), and also exhibited high conductivity and transparency.

### (Conductive composite coated with hydrolysate of the compound (C))

On the surface coated with a carbon nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes and then heated. The obtained coating film had surface resistance of 8.5 × 10² Ω/□ and a light transmittance of 81.0% (transmittance of light having 550 nm of a transparent conductive film/transmittance of light having 550 nm of a substrate = 89%) and the transmittance was improved when compared with that before coating. Before and after the moist heat resistance test, surface resistance was measured. As a result, a change ratio of surface resistance was 1.4.

### (Example 3)

### (Preparation of dispersion liquid containing carbon nanotube and hyaluronic acid)

In a 50 mL container, 10 mg (on dry basis) of the carbon nanotube obtained in Reference Example 1 and 10 mg of sodium hyaluronate (manufactured by Sigma) were weighed and distilled water was added to make 10 g and the mixture was subjected to a dispersion treatment under ice cooling for 20 minutes using an ultrasonic homogenizer having an output of 20 W to prepare a carbon nanotube dispersion liquid. The obtained liquid was centrifuged at 10,000 G for 15 minutes using a high-speed centrifugal separator to obtain 9 mL of a supernatant. At this time, 1 mL of the remaining liquid was filtered through a filter having a pore diameter of 1 µm and washed, and then the obtained filtered substance was dried at 120°C by a dryer. The weight was measured. As a result, it was 1.2 mg. Therefore, it was found that 8.8 mg (0.88 mg/ mL) of the carbon nanotube is dispersed in the supernatant.

### (Conductive composite containing carbon nanotube and hyaluronic acid)

To 600 µL of the carbon nanotube dispersion liquid of the supernatant obtained above after centrifugation, 400 µL of ethanol was added as a wetting agent and the obtained liquid was coated on a polyethylene terephthalate (PET) film (manufactured by Toray Industries, Inc., 188 µm, light transmittance: 91.2%, 15 cm × 10 cm) with a polyester resin surface resin layer (dry thickness: 80 nm) using a bar coater (No. 8, coating thickness: 12 µm, coating weight of a carbon nanotube: 10 mg/m²), air-dried and then dried in a dryer at 120°C for 2 minutes thereby fixing the carbon nanotube. The obtained coating film had surface resistance of 2.5 × 10³ Ω/□ and a light transmittance of 85.1% (transmittance of light having 550 nm of a transparent conductive film/transmittance of light having 550 nm of a substrate = 93%), and also exhibited high conductivity and transparency.

### (Conductive composite coated with hydrolysate of the compound (C))

On the surface coated with a carbon nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes. The obtained coating film had surface resistance of 2.7 × 10³ Ω/□ and a light transmittance of 85.2% (transmittance of light having 550 nm of a transparent conductive film/transmittance of light having 550 nm of a substrate = 93%) and the transmittance was improved when compared with that before coating. Before and after the moist heat resistance test, surface resistance was measured. As a result, a change ratio of surface resistance was 1.4.

### (Comparative Example 1)

A moist heat resistance test of transparent conductive films which were not coated with the hydrolysate of the compound (C) obtained in Examples 1 to 3 was conducted. As a result, a change ratio of surface resistance was respectively 2.0, 1.7 and 3.7.

### (Comparative Example 2)

On transparent conductive films which were not coated with the hydrolysate of the compound (C) obtained in Examples 1 and 2, a solution prepared by diluting a polymethyl methacrylate resin binder (Folet GS-1,000, manufactured by Soken Chemical & Engineering Co., Ltd.) with methyl isobutyl ketone to the concentration of 1.5% by weight was coated using a bar coater (No. 8, coating thickness: 12 µm) and then dried at 120°C for 5 minutes. The obtained coating films had surface resistance of 7.2 × 10³ Ω/□, a light transmittance of 84.5% (transmittance of light having 550 nm of a transparent conductive film/transmittance of light having 550 nm of a substrate = 93%), and has 8.2 × 10² Ω/□ and a light transmittance of 82.4% (transmittance of light having 550 nm of a transparent conductive film/transmittance of light having 550 nm of a substrate = 90%) and the transmittance was improved when compared with that before coating.

A moist heat resistance test of the obtained films was conducted. As a result, a change ratio of surface resistance was respectively 1.8 and 2.1.

### (Comparative Example 3)

### (Preparation of dispersion liquid containing carbon nanotube and polystyrenesulfonic acid)

In a 50 mL container, 10 mg (on dry basis) of the carbon nanotube obtained in Reference Example 1 and 33 mg of an aqueous sodium polystyrenesulfonate solution (manufactured by Aldrich Corporation, 30% by weight, weight average molecular weight: 200,000) were weighed and distilled water was added to make 10 g and the mixture was subjected to a dispersion treatment under ice cooling for 20 minutes using an ultrasonic homogenizer having an output of 20 W to prepare a carbon nanotube dispersion liquid. The obtained liquid was centrifuged at 10,000 G for 15 minutes using a high-speed centrifugal separator to obtain 9 mL of a supernatant. At this time, 1 mL of the remaining liquid was filtered through a filter having a pore diameter of 1 µm and washed, and then the obtained filtered substance was dried at 120°C by a dryer. The weight was measured. As a result, it was 1.1 mg. Therefore, it was found that 9.9 mg (0.99 mg/ mL) of the carbon nanotube is dispersed in the supernatant.

### (Conductive composite containing carbon nanotube and polystyrenesulfonic acid)

To 600 µL of the carbon nanotube dispersion liquid of the supernatant obtained above after centrifugation, 400 µL of methanol was added as a wetting agent and the obtained liquid was coated on a polyethylene terephthalate (PET) film (manufactured by Toray Industries, Inc., 188 µm, light transmittance: 91.2%, 15 cm × 10 cm) with a polyester resin surface resin layer (dry thickness: 80 nm) using a bar coater (No. 8, coating thickness: 12 µm, coating weight of a carbon nanotube: 10 mg/m²), air-dried and then dried in a dryer at 120°C for 2 minutes thereby fixing the carbon nanotube. The obtained coating film had surface resistance of 6.0 × 10² Ω/□ and a light transmittance of 78.5% (transmittance of light having 550 nm of a transparent conductive film/transmittance of light having 550 nm of a substrate = 87%), and also exhibited high conductivity and transparency.

### (Conductive composite coated with hydrolysate of the compound (C))

On the surface coated with a carbon nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes. The obtained coating film had surface resistance of 7.2 × 10² Ω/□ and a light transmittance of 80.5% (transmittance of light having 550 nm of a transparent conductive film/transmittance of light having 550 nm of a substrate = 88%) and the transmittance was improved when compared with that before coating. Before and after the moist heat resistance test, surface resistance was measured. As a result, a change ratio of surface resistance was 2.3.

### (Example 4)

### (Hard coat agent coating)

On the surface opposite a conductive layer coated with the compound (C) obtained in Example 1, a coating solution for formation of a hard coat layer with the following composition was coated and then cured by irradiation with ultraviolet light for 15 seconds to provide a hard coat layer.

### (Coating solution for formation of hard coat layer)

| | |
|---|---|
| Dipentaerythritol hexaacrylate | 70 parts by weight |
| Dipentaerythritol tetramethacrylate | 10 parts by weight |
| Ethyl acrylate | 5 parts by weight |
| N-vinyl pyrrolidone | 15 parts by weight |
| 1-hydroxycyclohexyl phenyl ketone | 4 parts by weight |

The film obtained above was provided with wiring as an upper electrode. This film was provided with wiring as a lower electrode and allowed to face to an ITO glass substrate having a resin spacer, followed by lamination using a double-faced tape and further connection of a flexible printed circuit board to produce a transparent electrically conductive electrode for a resistant film type touch panel. A touch operation was conducted using a pen. As a result, the upper electrode was contacted with the lower electrode and coordinate information of the position subjected to the touch operation could be output.

### (Example 5)

### (Preparation of a dispersion liquid containing silver nanoparticles and carboxymethyl cellulose)

In a 50 mL container, 10 mg of silver nanoparticles (manufactured by Sigma, particle size < 100 nm) and 30 mg of sodium carboxymethyl cellulose (manufactured by Sigma, 90kDa, 50-200cps) were weighed and distilled water was added to 10 g and the obtained liquid was subjected to a dispersion treatment under ice cooling for 20 minutes using an ultrasonic homogenizer having an output of 20 W to prepare a silver nanotube dispersion liquid.

### (Conductive composite containing silver nanoparticles and carboxymethyl cellulose)

To 1 mL of the silver nanotube dispersion liquid obtained above, 1 mL of ethanol was added as a wetting agent and the obtained liquid was coated on a polyethylene terephthalate (PET) film (manufactured by Toray Industries, Inc., 188 µm, light transmittance: 91.2%, 15 cm × 10 cm) with a polyester resin surface resin layer (dry thickness: 80 nm) using a bar coater (No. 5, coating thickness: 7.5 µm), air-dried and then dried in a dryer at 120°C for 2 minutes thereby fixing the silver nanoparticles. The obtained coating film had surface resistance of 2.3 × 10⁵ Ω/□ and a light transmittance of 86.5% (transmittance of light having 550 nm of a transparent conductive film/transmittance of light having 550 nm of a substrate × 100 = 89%).

### (Conductive composite coated with hydrolysate of the compound (C))

On the surface coated with a silver nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes. The obtained coating film had surface resistance of 4.5 × 10⁵ Ω/□ and a light transmittance of 88.1% (transmittance of light having 550 nm of a transparent conductive film/transmittance of light having 550 nm of a substrate × 100 = 88%) and the transmittance was improved when compared with that before coating. Before and after the moist heat resistance test, surface resistance was measured. As a result, a change ratio of surface resistance was 1.4.

### (Example 6)

First, a solution of a thermosetting resin composition was prepared. In a flask, 0.83 g of a poly[melamine-co-formaldehyde] solution (manufactured by Aldrich Corporation, solid content: 84% by weight, 1-butanol solution), 0.3 g of a solid epoxy resin 157S70 (manufactured by Japan Epoxy Resins Co., Ltd.) and 98.9 g of 2-butanone were charged, followed by stirring at room temperature or 30 minutes to prepare a uniform resin solution. Separately, 0.1 g of a thermopolymerization initiator Curezole 2MZ (manufactured by Shikoku Chemicals Corporation) was dissolved in 9.9 g of 1-propanol to prepare a thermoinitiator solution. The above resin solution (100 ml) was mixed with 1 ml of a thermoinitiator solution to obtain a solution (solid content: about 1% by weight, melamine resin:solid epoxy resin = 70 parts by weight: 30 parts by weight) of a thermosetting resin composition. The solution (0.5 ml) was dropped on a PET film having a thickness of 188 µm cut into an A4 size, coated using a No. 4 bar coater and then placed in a hot air oven at 130°C for 30 seconds to obtain a thermosetting resin composition film. The thermosetting resin composition film was allowed to stand in a room at room temperature of 25°C and a relative humidity of 50% for 1 hour and then a contact angle of water was measured. As a result, it was 36°.

Subsequently, a carbon nanotube dispersion liquid was prepared. In a screw tube, 10 mg of a single-walled carbon nanotube (manufactured by Science Laboratories, Inc., purity of 95%, used without being purified) and 10 ml of an aqueous solution prepared by diluting an aqueous 18 wt% polystyrenesulfonic acid solution (manufactured by Aldrich Corporation) with ultrapure water to the concentration of 0.1% by weight were charged and then subjected to ultrasonic wave irradiation using an ultrasonic homogenizer (VCX-502, manufactured by TOKYO RIKAKI CO., LTD., output of 250 W, direct irradiation) to obtain a CNT dispersion liquid having a CNT concentration of 0.1% by weight. The obtained CNT dispersion liquid (0.5 ml) was dropped on a PET film with the thermosetting resin composition film formed thereon and coated using a No. 4 bar coater. As a result, the CNT dispersion liquid could be uniformly coated over the entire surface without being repelled. After drying in a hot air oven at 150°C for 30 seconds, the thermosetting resin composition was completely cured to obtain a substrate with a conductive film.

The transparent conductive film showed a transmittance of light having a wavelength of 550 nm of 82%. After coating the carbon nanotube dispersion liquid (after drying at 150°C), the contact angle of water of the surface of the resin film was 58°. The surface resistance of the conductive film side of the transparent conductive film was 1,000 Ω/□. After the tape peeling test, there was not any change in appearance of the film surface. The surface resistance of the peeled position was measured. As a result, it was 1,010 Ω/□.

A cross section of the transparent conductive film was cut out and was observed at a magnification of 100,000 times using a transmission electron microscope (TEM). As a result, it was found that 5 nm of the lower layer of a carbon nanotube having a thickness of 20 nm is embedded in the thermosetting resin film layer.

### (Conductive composite coated with hydrolysate of the compound (C))

On the surface coated with a carbon nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes. The obtained coating film had surface resistance of 1,200 Ω/□ and a light transmittance of 85% and the transmittance was improved when compared with that before coating. Before and after the moist heat resistance test, surface resistance was measured. As a result, a change ratio of surface resistance was 0.9.

### (Example 7)

First, a solution of a thermosetting resin composition was prepared. In a flask, 0.83 g of a poly[melamine-co-formaldehyde] solution (manufactured by Aldrich Corporation, solid content: 84% by weight, 1-butanol solution), 0.3 g of a solid epoxy resin 157S70 (manufactured by Japan Epoxy Resins Co., Ltd.) and 98.9 g of 2-butanone were charged, followed by stirring at room temperature or 30 minutes to prepare a uniform resin solution. Separately, 0.1 g of a thermopolymerization initiator Curezole 2MZ (manufactured by Shikoku Chemicals Corporation) was dissolved in 9.9 g of 1-propanol to prepare a thermoinitiator solution. The above resin solution (100 ml) was mixed with 1 ml of a thermoinitiator solution to obtain a solution (solid content: about 1% by weight, melamine resin:solid epoxy resin = 70 parts by weight: 30 parts by weight) of a thermosetting resin composition. The solution (0.5 ml) was dropped on a PET film having a thickness of 188 µm cut into an A4 size, coated using a No. 4 bar coater and then placed in a hot air oven at 130°C for 30 seconds to obtain a thermosetting resin composition film. The thermosetting resin composition film was allowed to stand in a room at room temperature of 25°C and a relative humidity of 50% for 1 hour and then a contact angle of water was measured. As a result, it was 36°.

### (Conductive composite containing carbon nanotube and carboxymethyl cellulose)

To 950 µL of the carbon nanotube dispersion liquid of the supernatant obtained in Example 1 after centrifugation, 50 µL of ethanol was added as a wetting agent and the obtained liquid was coated on a polyethylene terephthalate (PET) film (15 cm × 10 cm) with the above thermosetting resin film formed thereon using a bar coater (No. 5, coating thickness: 7.5 µm, coating weight of a carbon nanotube: 6.1 mg/m²), air-dried and then dried in a dryer at 120°C for 2 minutes thereby fixing the carbon nanotube. The obtained coating film had surface resistance of 1.42 × 10³ Ω/□ and a light transmittance of 83.4% (transmittance of light having 550 nm of a transparent conductive film/transmittance of light having 550 nm of a substrate = 92%), and also exhibited high conductivity and transparency.

### (Conductive composite containing carbon nanotube and carboxymethyl cellulose)

On the surface coated with a carbon nanotube of the transparent conductive film obtained above, a solution prepared by diluting the solution obtained in Reference Example 2 with a mixed liquid of toluene and isopropyl alcohol to the concentration of 1.0% by weight was coated. After coating using a bar coater (No. 8, coating thickness: 12 µm), the solution was dried at 140°C for 5 minutes and then heated. The obtained coating film had surface resistance of 1.20 × 10³ Ω/□ and a light transmittance of 86.2 % (transmittance of light having 550 nm of a transparent conductive film/transmittance of light having 550 nm of a substrate = 95%), and the transmittance was improved when compared with that before coating.

A cross section of a transparent conductive film was observed by a transmission electron microscope. As a result, the total thickness of the conductive layer and the coating layer was 120 nm. Before and after the moist heat resistance test, surface resistance was measured. As a result, a change ratio of surface resistance was 1.1.

### INDUSTRIAL APPLICABILITY

The conductive composite of the present invention has moist heat resistance, water resistance and high conductivity and can be used as clean room members such as antielectric shoes and antielectric plates, and display and automobile members such as electromagnetic shielding, near infrared shielding, transparent electrodes, touch panels and radio wave absorption. The conductive composite exhibits particularly excellent performances for applications of touch panels.

## Claims

1. A method for producing a conductive composite, which comprises a first step of coating a composition (B) containing a dispersing agent (A) having a hydroxyl group in the molecule and a conductive material on a substrate, and a subsequent second step of coating a liquid containing a compound (C) represented by the formula (1) shown below and/or a hydrolysate of the compound (C) on the surface coated with the composition (B):
(R¹)ₘMXₙ₋ₘ (1)
wherein R¹ represents one, or two or more kinds of groups selected from a hydrogen atom, an alkyl group, an acyl group, a vinyl group, an allyl group, a cyclohexyl group, a phenyl group, an epoxy group, a (meth)acryloxy group, an ureide group, an amide group, a fluoroacetamide group, an isocyanate group and a substituted derivative thereof and, when m is 2 or more, R¹(s) may be the same of different; M represents one, or two or more kinds of metal atoms capable of forming a metal alkoxide selected from metal atoms having a valence of n; X represents a halogen atom or represented by OR² and, when n - m is 2 or more, X(s) may be the same or different; R² represents one, or two or more kinds of groups selected from a hydrogen atom, an alkyl group, an acyl group, a vinyl group, an allyl group, a cyclohexyl group, a phenyl group, an epoxy group, a (meth)acryloxy group, an ureide group, an amide group, a fluoroacetamide group, an isocyanate group and a substituted derivative thereof; and m is 0 to (n-2), and n is 2 or more.

2. The method for producing a conductive composite according to claim 1, wherein the conductive material is a carbon nanotube.

3. The method for producing a conductive composite according to claim 1 or 2, wherein, in the above formula (1), M represents a metal atom selected from silicon, titanium, aluminum and zirconium atoms.

4. The method for producing a conductive composite according to any one of claims 1 to 3, which comprises a step of adding an acid or base (D) to the composition (B) and/or the compound (C).

5. The method for producing a conductive composite according to any one of claims 1 to 4, which comprises, as a third step, a step of coating the acid or base (D) after the above first step and/or the above second step.

6. The method for producing a conductive composite according to any one of claims 1 to 5, wherein 50 or more carbon nanotubes among 100 carbon nanotubes of a composition containing a carbon nanotube are double-walled carbon nanotubes.

7. The method for producing a conductive composite according to any one of claims 1 to 6, which comprises a step of coating a resin solution on a substrate to form an under resin layer before the first step.

8. A composition comprising a carbon nanotube, a dispersing agent (A) having a hydroxyl group in the molecule and carbon nanotube, wherein 50 or more carbon nanotubes among 100 carbon nanotubes contained are double-walled carbon nanotubes and also the composition is acidic.

9. The composition comprising a carbon nanotube according to claim 8, wherein a dispersing agent (A) having a hydroxyl group in the molecule is carboxymethyl cellulose and/or a salt thereof.

10. A conductive composite comprising a substrate and a conductive layer formed on the substrate, wherein the conductive layer contains a dispersing agent (A) having a hydroxyl group in the molecule and/or a derivative thereof, and a carbon nanotube, 50 or more carbon nanotubes among 100 carbon nanotubes contained are double-walled carbon nanotubes, and the conductive layer is coated with a coating layer of a polycondensate of a compound (C) and/or a hydrolysate of the compound (C).

11. The conductive composite according to claim 10, wherein a resistance change ratio after a moist heat treatment is from 0.5 to 1.2.

12. The conductive composite according to claim 10 or 11, wherein the compound (C) and/or a hydrolysate of the compound (C) in the coating layer and the conductive layer has concentration gradient from the surface layer to the substrate side, and the surface layer has a high concentration than that of the substrate side.

13. The conductive composite according to any one of claims 10 to 12, wherein surface resistance is from 10¹ to 10⁴ Ω/□ or less, and a transmittance of light having 550 nm is 50% or more.

14. The conductive composite according to any one of claims 10 to 13, which comprises an under resin layer between the substrate and the conductive layer.

15. A touch panel comprising the conductive composite according to any one of claims 10 to 14.
